(19)

Europäisches
Patentamt
European
Patent Office
Office européen
des brevets

(11) **EP 4 243 492 A1**

(12) **EUROPEAN PATENT APPLICATION**
published in accordance with Art. 153(4) EPC

(43) Date of publication:
**13.09.2023 Bulletin 2023/37**

(21) Application number: **21902504.6**

(22) Date of filing: **03.12.2021**

(51) International Patent Classification (IPC):
**H04W 28/16** (2009.01)    **H04L 5/00** (2006.01)

(52) Cooperative Patent Classification (CPC):
**H04B 7/0456; H04B 7/06; H04L 5/00; H04W 28/16**

(86) International application number:
**PCT/CN2021/135367**

(87) International publication number:
**WO 2022/121797 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.12.2020   CN 202011444244
06.01.2021   CN 202110012794
25.02.2021   CN 202110214243**

(71) Applicant: **Huawei Technologies Co., Ltd.
Shenzhen, Guangdong 518129 (CN)**

(72) Inventors:
• **WANG, Sihai**
  **Shenzhen, Guangdong 518129 (CN)**
• **BI, Shuangkaisheng**
  **Shenzhen, Guangdong 518129 (CN)**
• **LI, Xueru**
  **Shenzhen, Guangdong 518129 (CN)**
• **QIN, Cheng**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **DATA TRANSMISSION METHOD AND APPARATUS**

(57)    This application provides a data transmission method and apparatus. The method includes: An access network device performs first encoding on a channel state information-reference signal CSI-RS, to generate first information, where the CSI-RS is used to obtain channel state information CSI corresponding to a channel between the access network device and a terminal device; the access network device sends the first information to the terminal device over N radio frequency links, where N is a positive integer; the access network device receives third information from the terminal device, where the third information is generated by the terminal device after the terminal device performs second encoding on second information, and the second information is determined by the terminal device based on the first information and the CSI-RS; and the access network device performs first decoding on the third information, to generate the CSI, where the first decoding includes decoding corresponding to the first encoding. In this way, occupation of resources in a process of obtaining the CSI can be reduced.

FIG. 11

## Description

## DATA TRANSMISSION METHOD AND APPARATUS

This application claims priority to Chinese Patent Application No. 202011444244.0, filed with the China National Intellectual Property Administration on December 8, 2020 and entitled "COMPOSITE ENCODING AND DECODING STRUCTURE FOR CHANNEL INFORMATION FEEDBACK", priority to Chinese Patent Application No. 202110012794.3, filed with the China National Intellectual Property Administration on January 6, 2021 and entitled "DATA TRANSMISSION METHOD AND APPARATUS", and priority to Chinese Patent Application No. 202110214243.5, filed with the China National Intellectual Property Administration on February 25, 2021 and entitled "DATA TRANSMISSION METHOD AND APPARATUS", which are incorporated herein by reference in their entireties.

## TECHNICAL FIELD

This application relates to the field of wireless communication, and more specifically, to a data transmission method and apparatus.

## BACKGROUND

In a multi-antenna wireless communication system, a terminal device needs to feed estimated channel state information (channel state information, CSI) back to an access network device, so that the access network device performs multi-antenna precoding based on the CSI. A precoded radio signal can resist channel distortion and increase a channel capacity.

As an antenna quantity and a bandwidth increase, a channel state information-reference signal (CSI-reference signal, CSI-RS) and CSI need to occupy a large amount of valuable air interface resources when being transmitted. Therefore, a CSI obtaining method is urgently needed, to reduce occupation of resources.

## SUMMARY

This application provides a data transmission method and apparatus, to reduce occupation of resources.

According to a first aspect, a data transmission method is provided. The method may be performed by an access network device or a chip in an access network device. The method includes: An access network device performs first encoding on a channel state information-reference signal CSI-RS, to generate first information, where the CSI-RS is used to obtain channel state information CSI corresponding to a channel between the access network device and a terminal device; the access network device sends the first information to the terminal device over N radio frequency links, where N is a positive integer; the access network device receives third information from the terminal device, where the third information is generated by the terminal device after the terminal device performs second encoding on second information, and the second information is determined by the terminal device based on the first information and the CSI-RS; and the access network device performs first decoding on the third information, to generate the CSI, where the first decoding includes decoding corresponding to the first encoding.

For example, after the access network device sends the CSI-RS on which the first encoding is performed to the terminal device over the N radio frequency links by using M resources, the terminal device observes the CSI-RS on which the first encoding is performed, and then determines the second information that implicitly includes the CSI. M is a positive integer.

The access network device sends the CSI-RS that is used to obtain the CSI to the terminal device. To save valuable resources, the access network device may encode the CSI-RS and then send the encoded CSI-RS to the terminal device, that is, send the first information to the terminal device. After receiving the first information transmitted over the N radio frequency links, the terminal device may generate the second information based on the first information and the CSI-RS. The CSI-RS may be preconfigured in the terminal device. That is, the terminal device receives the first information transmitted on the channel, observes the first information, and then obtains the second information that implicitly includes the CSI. The terminal device performs the second encoding on the second information, to generate the third information. After receiving and decoding the third information, the access network device obtains the CSI.

Therefore, in this application, the access network device sends the encoded CSI-RS to the terminal device over the N radio frequency links; the terminal device does not need to decode the encoded CSI-RS, but performs encoding again and sends an encoding result to the access network device; and the access network device performs decoding to obtain the CSI. In this way, occupation of resources in a process of obtaining the CSI can be reduced.

With reference to the first aspect, in some implementations of the first aspect, the method further includes: The access network device performs second decoding on the third information, where the second decoding corresponds to the second encoding; and that the access network device performs first decoding on the third information includes: the access network device performs the first decoding on the third information on which the second decoding is performed.

After receiving the information that is encoded twice, the access network device may first perform the second decoding for the second encoding, and then perform the first decoding, for the first encoding, on the third information on which the second decoding is performed, that is, decode the third information by using a two-level decoding structure, to obtain the CSI.

With reference to the first aspect, in some implementations of the first aspect, the first decoding further includes decoding corresponding to the second encoding.

It should be noted that the third information received by an access network is information that is encoded twice. However, decoding structures corresponding to the two times of encoding may be fused into one structure. That is, the first decoding may be performed on the third information. The first decoding includes both decoding corresponding to the first encoding and decoding corresponding to the second encoding. The required CSI is obtained by performing decoding once.

Therefore, in this application, the access network device can decode, by using a fused structure, information that is encoded twice, improving accuracy of decoding.

With reference to the first aspect, in some implementations of the first aspect, the second encoding is encoding that is based on a first neural network, a parameter of the first neural network is related to a quantity F of sampling points of the channel and a quantity M of resources occupied by the first information, M and F are positive integers, M<N, and the resource includes at least one of the following: a time domain resource, a frequency domain resource, or a code domain resource.

With reference to the first aspect, in some implementations of the first aspect, the parameter of the first neural network is a dimension of an input matrix of the first neural network.

Therefore, in this application, the terminal device may perform encoding again using a neural network and then feed the CSI back to a network device, further reducing resource overheads used for feeding the CSI back.

With reference to the first aspect, in some implementations of the first aspect, the first encoding is encoding that is based on compressed sensing, the first encoding uses a first matrix, and a dimension of the first matrix is related to M and N.

Optionally, the dimension of the first matrix is M×N.

Optionally, the first matrix is in a form of a plurality of matrices being multiplied, and a dimension of a matrix obtained after the plurality of matrices are multiplied is M×N.

Therefore, in this application, for the N radio frequency links, the access network device may use compressed sensing and reserve only M groups of resources for CSI-RS sending, reducing occupation of resources during sending of the CSI-RS.

With reference to the first aspect, in some implementations of the first aspect, the first encoding is encoding that is based on a second neural network, the second neural network includes a fully connected linear layer, and a parameter of the fully connected linear layer is related to M and N.

For example, the fully connected linear layer may be in a form of at least one matrix being multiplied, and a dimension of a formed matrix is M×N.

Therefore, in this application, for the N radio frequency links, the access network device may use the second neural network that includes the fully connected linear layer and reserve only M groups of resources for CSI-RS sending, reducing occupation of resources during sending of the CSI-RS.

With reference to the first aspect, in some implementations of the first aspect, the first decoding is decoding that is based on a third neural network, and a parameter of the third neural network is related to N, M, and F.

Optionally, the third neural network is used only for the decoding corresponding to the first encoding. The parameter of the third neural network is related to N, M, and F.

Optionally, the third neural network is used for both the decoding corresponding to the first encoding and the decoding corresponding to the second encoding. The parameter of the third neural network is related to N, M, and F.

With reference to the first aspect, in some implementations of the first aspect, a manner of training the first neural network is connecting the first matrix, the first neural network, and the third neural network in series and performing joint training.

With reference to the first aspect, in some implementations of the first aspect, a manner of training the first neural network is connecting the second neural network, the first neural network, and the third neural network in series and performing joint training.

It should be noted that the third neural network in this case is a fused decoding structure corresponding to the first decoding and the second decoding.

With reference to the first aspect, in some implementations of the first aspect, the second decoding is decoding that is based on a fourth neural network. A manner of training the first neural network is a training manner of connecting the first neural network and the fourth neural network in series, or a training manner of connecting the first matrix, the first neural network, the fourth neural network, and the third neural network in series, or a training manner of connecting the second neural network, the first neural network, the fourth neural network, and the third neural network in series.

Therefore, in this application, the access network device sends the encoded CSI-RS to the terminal device over the N radio frequency links; the terminal device does not need to decode the encoded CSI-RS, but performs encoding again and sends an encoding result to the access network device; and the access network device performs decoding to obtain the CSI. In this way, occupation of resources in a process of obtaining the CSI can be reduced.

According to a second aspect, a data transmission method is provided. The method may be performed by a terminal device or a chip in a terminal device. The method includes: A terminal device receives first information that is sent by an access network device to the terminal device over N radio frequency links, where the first information is generated by the access network device after the access network device performs first encoding on a channel state information-reference signal CSI-RS, and the CSI-RS is used to obtain channel information CSI; the terminal device determines second information based on the first information and the CSI-RS; the terminal device performs second encoding on the second information, to generate third information; and the terminal device sends the third information to the access network device, where the third information is used by the access network device to perform first decoding on the third information, to generate the CSI, and the first decoding includes decoding corresponding to the first encoding.

The access network device sends the CSI-RS that is used to obtain the CSI to the terminal device. To save valuable resources, the access network device may encode the CSI-RS and then send the encoded CSI-RS to the terminal device, that is, send the first information to the terminal device. After receiving the first information transmitted over the N radio frequency links, the terminal device may generate the second information based on the first information and the CSI-RS. The CSI-RS may be preconfigured in the terminal device. That is, the terminal device receives the first information transmitted on a channel, observes the first information, and then obtains the second information that implicitly includes the CSI. The terminal device performs the second encoding on the second information, to generate the third information. After receiving and decoding the third information, the access network device obtains the CSI.

Therefore, in this application, the access network device sends the encoded CSI-RS to the terminal device over the N radio frequency links; the terminal device does not need to decode the encoded CSI-RS, but performs encoding again and sends an encoding result to the access network device; and the access network device performs decoding to obtain the CSI. In this way, occupation of resources in a process of obtaining the CSI can be reduced.

With reference to the second aspect, in some implementations of the second aspect, the third information is used by the access network device to perform the first decoding on the third information on which second decoding is performed, to generate the CSI, and the second decoding corresponds to the second encoding.

With reference to the second aspect, in some implementations of the second aspect, the first decoding further includes decoding corresponding to the second encoding.

With reference to the second aspect, in some implementations of the second aspect, the second encoding is encoding that is based on a first neural network, a parameter of the first neural network is related to a quantity F of sampling points of the channel and a quantity M of resources occupied by the first information, M and F are positive integers, M<N, and the resource includes at least one of the following: a time domain resource, a frequency domain resource, or a code domain resource.

With reference to the second aspect, in some implementations of the second aspect, the parameter of the first neural network is a dimension of an input matrix of the first neural network.

With reference to the second aspect, in some implementations of the second aspect, the first encoding is encoding that is based on compressed sensing, the first encoding uses a first matrix, and a dimension of the first matrix is related to M and N.

With reference to the second aspect, in some implementations of the second aspect, the first encoding is encoding that is based on a second neural network, the second neural network includes a fully connected linear layer, and a parameter of the fully connected linear layer is related to M and N.

With reference to the second aspect, in some implementations of the second aspect, the first decoding is decoding that is based on a third neural network, and a parameter of the third neural network is related to N, M, and F.

According to a third aspect, a data transmission apparatus is provided. The apparatus includes: a processing unit, configured to perform first encoding on a channel state information-reference signal CSI-RS, to generate first information, where the CSI-RS is used to obtain channel state information CSI corresponding to a channel between an access network device and a terminal device; and a transceiver unit, configured to send the first information to the terminal device over N radio frequency links, where N is a positive integer, third information is generated by the terminal device after the terminal device performs second encoding on second information, and the second information is determined by the terminal device based on the first information and the C SI-RS. The processing unit is further configured to perform first decoding on the third information, to generate the CSI, where the first decoding includes decoding corresponding to the first encoding.

Therefore, in this application, the access network device sends the encoded CSI-RS to the terminal device over the N radio frequency links; the terminal device does not need to decode the encoded CSI-RS, but performs encoding again and sends an encoding result to the access network device; and the access network device performs decoding to obtain the CSI. In this way, occupation of resources in a process of obtaining the CSI can be reduced.

With reference to the third aspect, in some implementations of the third aspect, the processing unit is further configured to perform second decoding on the third information, where the second decoding corresponds to the second encoding; and that the processing unit is further configured to perform first decoding on the third information may be specifically: The processing unit is configured to perform the first decoding on the third information on which the second decoding is performed.

With reference to the third aspect, in some implementations of the third aspect, the first decoding further includes decoding corresponding to the second encoding.

With reference to the third aspect, in some implementations of the third aspect, the second encoding is encoding that is based on a first neural network, a parameter of the first neural network is related to a quantity F of sampling points of the channel and a quantity M of resources occupied by the first information, M and F are positive integers, M<N, and the resource includes at least one of the following: a time domain resource, a frequency domain resource, or a code domain resource.

With reference to the third aspect, in some implementations of the third aspect, the parameter of the first neural network is a dimension of an input matrix of the first neural network.

With reference to the second aspect, in some implementations of the second aspect, the first encoding is encoding that is based on compressed sensing, the first encoding uses a first matrix, and a dimension of the first matrix is related to M and N.

With reference to the third aspect, in some implementations of the third aspect, the first encoding is encoding that is based on a second neural network, the second neural network includes a fully connected linear layer, and a parameter of the fully connected linear layer is related to M and N.

With reference to the third aspect, in some implementations of the third aspect, the first decoding is decoding that is based on a third neural network, and a parameter of the third neural network is related to N, M, and F.

According to a fourth aspect, a data transmission apparatus is provided. The apparatus includes: a transceiver unit, configured to receive first information that is sent by an access network device over N radio frequency links, where the first information is generated by the access network device after the access network device performs first encoding on a channel state information-reference signal CSI-RS, and the CSI-RS is used to obtain channel information CSI; and a processing unit, configured to determine second information based on the first information and the CSI-RS; the processing unit is further configured to perform second encoding on the second information; and the transceiver unit is further configured to send third information to the access network device, where the third information is used by the access network device to perform first decoding on the third information, to generate the CSI, and the first decoding includes decoding corresponding to the first encoding.

Therefore, in this application, the access network device sends the encoded CSI-RS to the terminal device over the N radio frequency links; the terminal device does not need to decode the encoded CSI-RS, but performs encoding again and sends an encoding result to the access network device; and the access network device performs decoding to obtain the CSI. In this way, occupation of resources in a process of obtaining the CSI can be reduced.

With reference to the fourth aspect, in some implementations of the fourth aspect, the third information is used by the access network device to perform the first decoding on the third information on which second decoding is performed, to generate the CSI, and the second decoding corresponds to the second encoding.

With reference to the fourth aspect, in some implementations of the fourth aspect, the first decoding further includes decoding corresponding to the second encoding.

With reference to the fourth aspect, in some implementations of the fourth aspect, the second encoding is encoding that is based on a first neural network, a parameter of the first neural network is related to a quantity F of sampling points of a channel and a quantity M of resources occupied by the first information, M and F are positive integers, M<N, and the resource includes at least one of the following: a time domain resource, a frequency domain resource, or a code domain resource.

With reference to the fourth aspect, in some implementations of the fourth aspect, the parameter of the first neural network is a dimension of an input matrix of the first neural network.

With reference to the second aspect, in some implementations of the second aspect, the first encoding is encoding that is based on compressed sensing, the first encoding uses a first matrix, and a dimension of the first matrix is related to M and N.

With reference to the fourth aspect, in some implementations of the fourth aspect, the first encoding is encoding that is based on a second neural network, the second neural network includes a fully connected linear layer, and a parameter of the fully connected linear layer is related to M and N.

With reference to the fourth aspect, in some implementations of the fourth aspect, the first decoding is decoding that is based on a third neural network, and a parameter of the third neural network is related to N, M, and F.

According to a fifth aspect, a data transmission method is provided. The method includes: performing dimension reduction processing on first information, to generate second information; and encoding the second information based on a first neural network, where a dimension of the second information corresponds to a dimension of information that can be processed by the first neural network.

In this application, dimension reduction processing is first performed on information, to obtain the low-dimensional second information, and then the second information is encoded based on the first neural network, greatly reducing an amount of computation of encoding while ensuring quality of encoding.

With reference to the fifth aspect, in some implementations of the fifth aspect, the first neural network is obtained through training based on first training data, and the first training data is data that is obtained after dimension reduction processing is performed.

With reference to the fifth aspect, in some implementations of the fifth aspect, the first training data is the second information.

The first neural network may be trained by using data that is obtained after dimension reduction processing is performed, and therefore can process data that corresponds to the dimension of the second information, improving performance of encoding.

With reference to the fifth aspect, in some implementations of the fifth aspect, a manner of training the first neural network is connecting dimension reduction processing and the first neural network in series and performing joint training.

In this application, dimension reduction processing and the first neural network may be cascaded for joint training. In this training manner, the neural network is less dependent on training data, also has good performance on data outside a training set, and finally obtains some generalization capabilities.

With reference to the fifth aspect, in some implementations of the fifth aspect, the performing dimension reduction processing on first information includes: performing dimension reduction processing on the first information in a compressed sensing manner, where the compressed sensing manner uses a first matrix, and a dimension of the first matrix corresponds to a dimension of information that can be processed by the first neural network.

The compressed sensing manner may be ultimately presented as a one-layer matrix. Using the compressed sensing manner can realize dimension reduction for channel information. Therefore, when the first neural network encodes the dimension-reduced channel information, an overall amount of computation of encoding can be reduced. In addition, compared with a manner of using only compression encoding, the composite encoding manner combining compression encoding and neural network encoding can help significantly improve quality of the channel information.

With reference to the fifth aspect, in some implementations of the fifth aspect, the performing dimension reduction processing on first information, to generate second information includes: performing dimension reduction processing on the first information based on a first layer to an $N^{th}$ layer of the first neural network, where the first layer to the $N^{th}$ layer of the first neural network are a first fully connected linear layer, N is an integer, and N>1; and the encoding the second information based on a first neural network includes: encoding the second information based on an $(N+1)^{th}$ layer to an $M^{th}$ layer of the first neural network, where a dimension of the first fully connected linear layer corresponds to a dimension of information that can be processed by the $(N+1)^{th}$ layer to the $M^{th}$ layer of the first neural network, M is an integer, and M>N+1.

In this application, performing dimension reduction processing on the first information to generate the second information and encoding the second information based on the first neural network may be presented as an encoding structure of a neural network. A first layer to an $N^{th}$ layer of the neural network is a fully connected linear layer. To be specific, dimension reduction processing is first performed on the channel information by using the fully connected linear layer, and then the dimension-reduced channel information is encoded at subsequent layers. This application differs from a current encoding manner that is based on a neural network. In the current manner, the neural network usually first performs data padding and then performs dimension reduction at subsequent layers. In this application, dimension reduction is performed first, greatly reducing an amount of computation of encoding.

With reference to the fifth aspect, in some implementations of the fifth aspect, the performing dimension reduction processing on first information, to generate second information includes: performing dimension reduction processing on the first information based on a second neural network, to generate the second information, where the second neural network includes a second fully connected linear layer, and the second fully connected linear layer corresponds to a dimension of information that can be processed by the first neural network.

A fully connected linear layer may be mathematically presented as non-sparse matrices being multiplied. Therefore, dimension reduction processing may be performed on the channel information by using the fully connected linear layer.

With reference to the fifth aspect, in some implementations of the fifth aspect, the first information is channel state information.

Performing dimension reduction processing on the first information to generate the second information is performing dimension reduction processing on the channel state information to generate dimension-reduced channel state information. The dimension-reduced channel state information is encoded based on the first neural network, to generate encoded channel state information to be sent.

According to a sixth aspect, a data transmission apparatus is provided. The apparatus includes: a transceiver unit, configured to receive first information; and a processing unit, configured to perform dimension reduction processing on the first information, to generate second information; and the processing unit is further configured to encode the second information based on a first neural network, where a dimension of the second information corresponds to a dimension of information that can be processed by the first neural network.

The apparatus first performs dimension reduction processing on channel information, to obtain the low-dimensional second information, and then encodes the second information based on the first neural network, greatly reducing an amount of computation of encoding and also ensuring quality of encoding.

With reference to the sixth aspect, in some implementations of the sixth aspect, the first neural network is obtained through training based on first training data, and the first training data is data that is obtained after dimension reduction processing is performed.

With reference to the sixth aspect, in some implementations of the sixth aspect, the first training data is the second information.

With reference to the sixth aspect, in some implementations of the sixth aspect, a manner of training the first neural network is connecting dimension reduction processing and the first neural network in series and performing joint training.

With reference to the sixth aspect, in some implementations of the sixth aspect, the processing unit is specifically configured to perform dimension reduction processing on the first information in a compressed sensing manner, where the compressed sensing manner uses a first matrix, and a dimension of the first matrix corresponds to a dimension of information that can be processed by the first neural network.

With reference to the sixth aspect, in some implementations of the sixth aspect, the processing unit is specifically configured to: perform dimension reduction processing on the first information based on a first layer to an $N^{th}$ layer of the first neural network, where the first layer to the $N^{th}$ layer of the first neural network are a first fully connected linear layer, N is an integer, and $N \geq 1$; and encode the second information based on an $(N+1)^{th}$ layer to an $M^{th}$ layer of the first neural network, where a dimension of the first fully connected linear layer corresponds to a dimension of information that can be processed by the $(N+1)^{th}$ layer to the $M^{th}$ layer of the first neural network, M is an integer, and $M \geq N+1$.

With reference to the sixth aspect, in some implementations of the sixth aspect, the processing unit is specifically configured to perform dimension reduction processing on the first information based on a second neural network, to generate the second information, where the second neural network includes a second fully connected linear layer, and the second fully connected linear layer corresponds to a dimension of information that can be processed by the first neural network.

With reference to the sixth aspect, in some implementations of the sixth aspect, the first information is channel state information.

According to a seventh aspect, a data transmission method is provided. The method includes: receiving third information; decoding the third information based on a third neural network, to generate fourth information, where a dimension of the third information corresponds to a dimension of information that can be processed by the third neural network; and performing restoration processing on the fourth information, where restoration processing corresponds to dimension reduction processing.

With reference to the seventh aspect, in some implementations of the seventh aspect, a manner of training the third neural network is connecting dimension reduction processing, a first neural network, the third neural network, and restoration processing in series and performing joint training.

With reference to the seventh aspect, in some implementations of the seventh aspect, restoration processing is performed on the fourth information in a compressed sensing manner.

With reference to the seventh aspect, in some implementations of the seventh aspect, the third information is encoded channel state information.

According to an eighth aspect, a data transmission apparatus is provided. The apparatus includes: a transceiver unit, configured to receive third information; and a processing unit, configured to decode the third information based on a third neural network, where a dimension of the third information corresponds to a dimension of information that can be processed by the first neural network.

With reference to the eighth aspect, in some implementations of the eighth aspect, a manner of training the third neural network is connecting dimension reduction processing, a first neural network, the third neural network, and restoration processing in series and performing joint training.

With reference to the eighth aspect, in some implementations of the eighth aspect, restoration processing is performed on the fourth information in a compressed sensing manner.

With reference to the eighth aspect, in some implementations of the eighth aspect, the third information is encoded channel state information.

According to a ninth aspect, a communication apparatus is provided. The apparatus may include a processing unit, a sending unit, and a receiving unit. Optionally, the sending unit and the receiving unit may alternatively be a transceiver unit.

When the apparatus is an access network device, the processing unit may be a processor, and the sending unit and the receiving unit may be a transceiver. The apparatus may further include a storage unit. The storage unit may be a memory. The storage unit is configured to store instructions. The processing unit executes the instructions stored in the storage unit, so that the access network device performs any method in the first aspect, the second aspect, the fifth aspect, or the seventh aspect. When the apparatus is a chip in an access network device, the processing unit may be a processor, and the sending unit and the receiving unit may be an input/output interface, a pin, a circuit, or the like. The processing unit executes instructions stored in a storage unit, so that the chip performs the method in the first aspect, the second aspect, the fifth aspect, or the seventh aspect. The storage unit is configured to store instructions. The storage unit may be a storage unit (for example, a register or a cache) in the chip, or may be a storage unit (for example, a read-only memory or a random access memory) that is in the access network device but is located outside the chip.

When the apparatus is a terminal device, the processing unit may be a processor, and the sending unit and the receiving unit may be a transceiver. The apparatus may further include a storage unit. The storage unit may be a memory. The storage unit is configured to store instructions. The processing unit executes the instructions stored in the storage unit, so that the terminal device performs any method in the first aspect, the second aspect, the fifth aspect, or the seventh aspect. When the apparatus is a chip in a terminal device, the processing unit may be a processor, and the sending unit and the receiving unit may be an input/output interface, a pin, a circuit, or the like. The processing unit executes instructions stored in a storage unit, so that the chip performs the method in the first aspect, the second aspect, the fifth aspect, or the seventh aspect. The storage unit is configured to store instructions. The storage unit may be a storage unit (for example, a register or a cache) in the chip, or may be a storage unit (for example, a read-only memory or a random access memory) that is in the terminal device but is located outside the chip.

According to a tenth aspect, a communication apparatus is provided, including a processor and an interface circuit. The interface circuit is configured to: receive a signal from other communication apparatuses other than the communication apparatus and transmit the signal to the processor, or send a signal from the processor to other communication apparatuses other than the communication apparatus. The processor is configured to implement any methods in the first aspect to the fifth aspect by using a logic circuit or executing code or instructions.

According to an eleventh aspect, a computer-readable storage medium is provided. The computer-readable storage medium stores a computer program or instructions. When the computer program or instructions are executed, any method in the first aspect, the second aspect, the fifth aspect, or the seventh aspect is implemented.

According to a twelfth aspect, a computer program product including instructions is provided. When the instructions are run, any method in the first aspect, the second aspect, the fifth aspect, or the seventh aspect is implemented.

According to a thirteenth aspect, a computer program is provided. The computer program includes code or instructions. When the code or instructions are run, the method in any one of the possible implementations of the first aspect, the second aspect, the fifth aspect, or the seventh aspect is implemented.

According to a fourteenth aspect, a chip system is provided. The chip system includes a processor, may further include a memory, and is configured to implement at least one of the methods described in the first aspect, the second aspect, the fifth aspect, or the seventh aspect. The chip system may include a chip, or may include a chip and another discrete device.

According to a fifteenth aspect, a communication system is provided. The system includes any one (for example, an access network device) of the apparatuses in the ninth aspect to the fourteenth aspect.

According to a sixteenth aspect, a communication system is provided. The system includes any one (for example, a terminal device) of the apparatuses in the ninth aspect to the fourteenth aspect.

**BRIEF DESCRIPTION OF DRAWINGS**

FIG. 1 is a schematic diagram of an example to which a data transmission method in this application is applicable;
FIG. 2 is a schematic diagram of an example of a compressed sensing-based CSI transmission structure;
FIG. 3 is a schematic flowchart of an example of CSI transmission according to an embodiment of this application;
FIG. 4 is a schematic diagram of an example of a CSI transmission structure according to an embodiment of this application;
FIG. 5 is a schematic diagram of another example of a CSI transmission structure according to an embodiment of this application;
FIG. 6 is a schematic flowchart of an example of CSI obtaining according to an embodiment of this application;
FIG. 7 is a schematic diagram of an example of a CSI obtaining structure; and
FIG. 8 to FIG. 11 are schematic diagrams of structures of possible apparatuses according to embodiments of this application.

**DESCRIPTION OF EMBODIMENTS**

The following describes technical solutions in this application with reference to the accompanying drawings.

The technical solutions provided in this application may be applied to various communication systems, for example, a long term evolution (Long Term Evolution, LTE) system, an LTE frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5th generation (5th Generation, 5G) mobile communication system, or new radio access technology (new radio access technology, NR). The 5G mobile communication system may include a non-standalone (non-standalone, NSA) communication system and/or a standalone (standalone, SA) communication system.

The technical solutions provided in this application may be further applied to machine type communication (machine type communication, MTC), machine-to-machine communication long term evolution technology (Long Term Evolution-machine, LTE-M), a device to device (device to device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a sixth generation mobile communication system. This is not limited in this application.

In embodiments of this application, an access network device may be any device with a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP). Alternatively, the device may be a gNB or a transmission point (TRP or TP) in a 5G system such as an NR system, may be an antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

In some deployments, a gNB may include a centralized unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and functions related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, s an AAU node. In addition, the CU may be classified as an access network device in an access network (radio access network, RAN), or the CU may be classified as an access network device in a core network (core network, CN). This is not limited in this application.

An access network device provides a service for a cell, and a terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell. The small cell herein may include: a city cell, a micro cell, a pico cell, a femto cell, and the like. These small cells have characteristics of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity to a user, for example, a handheld device or vehicle-mounted device with a wireless connectivity function. Currently, some examples of the terminal may be: a mobile phone, a tablet computer, a computer with a wireless transceiver function (such as a notebook computer or a palmtop computer), a mobile internet device (mobile internet device, MID), a virtual reality (virtual reality, VR) device, an augmented reality (augmented reality, AR) device, a wireless terminal in industrial control, a wireless terminal in self driving, a wireless terminal in telemedicine, a wireless terminal in a smart grid, a wireless terminal in transportation safety, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device or computing device with a wireless communication function or another processing device, vehicle-mounted device, or wearable device connected to a wireless modem, a terminal device in a 5G network, or a terminal device in a future evolved public land mobile network (public land mobile network, PLMN).

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that is worn directly on the body or integrated onto clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. IoT technologies can achieve massive connections, intensive coverage, and power saving for terminals by using, for example, a narrow band (narrow band, NB) technology.

In addition, the terminal device may further include sensors such as a smart printer, a train detector, and a gas station. Main functions of the terminal device include: collecting data (which is a function of some terminal devices), receiving control information and downlink data of an access network device, sending electromagnetic waves, and transmitting uplink data to an access network device.

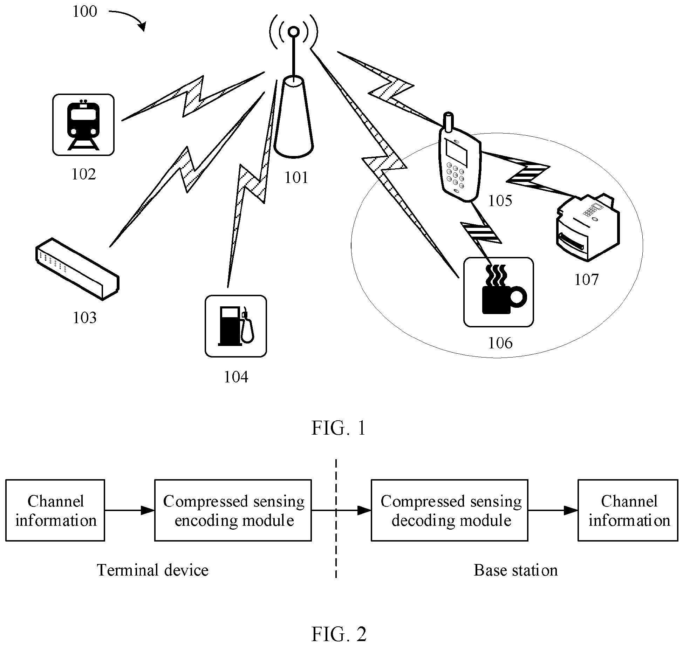

For ease of understanding embodiments of this application, a communication system to which a channel sounding method provided in an embodiment of this application is applicable is first described in detail with reference to FIG. 1. FIG. 1 is a schematic diagram of a communication system 100 to which a method provided in an embodiment of this application is applicable. As shown in the figure, the communication system 100 may include at least one access network device, for example, an access network device 101 shown in FIG. 1. The communication system 100 may further include at least one terminal device, for example, terminal devices 102 to 107 shown in FIG. 1. The terminal devices 102 to 107 may be mobile or stationary. The access network device 101 may communicate with one or more of the terminal devices 102 to 107 over a radio link. Each access network device can provide communication coverage for a particular geographic area, and may communicate with a terminal device located in the coverage area. For example, the access network device may send configuration information to the terminal device, and the terminal device may send uplink data to the access network device based on the configuration information. For another example, the access network device may send downlink data to the terminal device. Therefore, the access network device 101 and the terminal devices 102 to 107 in FIG. 1 constitute a communication system.

Optionally, the terminal devices may communicate with each other directly. For example, direct communication between the terminal devices may be implemented using a D2D technology or the like. As shown in the figure, the terminal devices 105 and 106 may directly communicate with each other using the D2D technology, and the terminal devices 105 and 107 may directly communicate with each other using the D2D technology. The terminal device 106 and the terminal device 107 may communicate with the terminal device 105 separately or simultaneously.

The terminal devices 105 to 107 may alternatively communicate with the access network device 101 separately. For example, the terminal devices 105 to 107 may communicate with the access network device 101 directly. For example, the terminal devices 105 and 106 in FIG. 1 may communicate with the access network device 101 directly. Alternatively, the terminal devices 105 to 107 may communicate with the access network device 101 indirectly. For example, the terminal device 107 in FIG. 1 communicates with the access network device 101 via the terminal device 105.

It should be understood that FIG. 1 shows an example of one access network device, a plurality of terminal devices, and communication links between the communication devices. Optionally, the communication system 100 may include a plurality of access network devices, and in a coverage area of each access network device, another quantity of terminal devices, for example, more or fewer terminal devices, may be included. This is not limited in this application.

A plurality of antennas may be configured for each of the communication devices, for example, the access network device 101 and the terminal devices 102 to 107 in FIG. 1. The plurality of antennas may include at least one transmit antenna for sending a signal and at least one receive antenna for receiving a signal. In addition, each communication device further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal transmission and reception. Therefore, the access network device and the terminal device may communicate with each other using a multi-antenna technology.

Optionally, the wireless communication system 100 may further include other network entities such as a network controller or a mobility management entity. No limitation is set thereto in this embodiment of this application.

For ease of understanding embodiments of this application, several terms used in the following are first briefly described.

1. Antenna port: An antenna port is referred to as a port for short. One antenna port may be one physical antenna, or may be a weighted combination of a plurality of physical antennas.

In embodiments of this application, the antenna port may include a transmit antenna port and a receive antenna port.

The transmit antenna port may be understood as a transmit antenna identified by a receive end, or a transmit antenna that can be distinguished in space. Signals transmitted from a same transmit antenna port go through a same channel environment. A receive end may perform channel estimation based on this to demodulate a transmitted signal. In embodiments of this application, the transmit antenna port may be a stand-alone transceiver unit or a reference signal port. One reference signal port may correspond to one reference signal. For example, the reference signal port may include but is not limited to a channel state information-reference signal (channel state information reference signal, CSI-RS) port and a demodulation reference signal (demodulation reference signal, DMRS) port. This is not limited in this application.

The receive antenna port may be understood as a receive antenna identified by a receive end, or a receive antenna that can be distinguished in space. The receive antenna port and the transmit antenna port may be used for, for example, subsequent determining of a channel matrix. This is not limited in this application either.

2. Spatial domain vector: A spatial domain vector may also be referred to as an angle vector, a beam vector, or the like. Each element in the spatial domain vector may be used to represent a weight of each transmit antenna port. Based on the weight of each transmit antenna port that is represented by each element in the spatial domain vector, transmit energy of the transmit antenna ports is linearly superimposed, and a strong-energy area can be formed in a direction in space.

The spatial domain vector may be a vector whose length is T. T may represent a quantity of transmit antenna ports, and T is an integer greater than or equal to 1. The spatial domain vector may be, for example, a column vector or row vector whose length is T. This is not limited in this application. For ease of understanding and description below, it is assumed that the receive spatial domain vector is a column vector whose length is T.

A spatial domain vector whose length is T includes T spatial domain weights (or weights for short).

The T weights may be used to weight T transmit antenna ports, so that reference signals transmitted from the T transmit antenna ports have a specific spatial direction, to implement beamforming. Therefore, precoding a signal based on different spatial domain vectors is equivalent to performing beamforming for transmit antenna ports based on different spatial domain vectors, so that transmitted signals have different spatial directions.

Optionally, the spatial domain vector is a discrete Fourier transform (discrete Fourier transform, DFT) vector. The DFT vector may be a column vector in a DFT matrix.

Optionally, the spatial domain vector is a conjugate transpose vector of a DFT vector. The DFT conjugate transpose vector may be a column vector in a conjugate transpose matrix of a DFT matrix.

Optionally, the spatial domain vector is an oversampled DFT vector. The oversampled DFT vector may be a vector in an oversampled DFT matrix.

Optionally, the spatial domain vector is a conjugate transpose vector of an oversampled DFT vector.

In a possible design, the spatial domain vector may be, for example, a two-dimensional (2 dimensions, 2D)-DFT vector $\mathbf{v}_{l,m}$ defined in a type II (type II) codebook in the 3rd generation partnership project (3rd Generation Partnership Project, 3GPP) technical specification (technical specification, TS) 38.214 release 15 (release 15, R15) or R16. In other words, the spatial domain vector may be a 2D-DFT vector or an oversampled 2D-DFT vector.

It should be understood that the foregoing example of a specific form of the spatial domain vector is merely an example, and shall not constitute any limitation on this application.

3. Frequency domain vector: A frequency domain vector may also be referred to as a delay vector. The frequency domain vector is a vector that may be used to represent a change pattern of a channel in frequency domain. Each frequency domain vector may represent one change pattern. When a signal is transmitted on a radio channel, the signal may arrive at a receive antenna through a plurality of paths from a transmit antenna. Frequency selective fading caused by multipath delays is a channel change in frequency domain. Therefore, different frequency domain vectors may be used to represent change patterns of a channel in frequency domain caused by delays on different transmission paths.

The frequency domain vector may be a vector whose length is N. N represents a quantity of frequency domain units, and N is an integer greater than or equal to 1. The frequency domain vector may be, for example, a column vector or row vector whose length is N. This is not limited in this application. For ease of understanding and description below, it is assumed that the frequency domain vector is a column vector whose length is N.

Optionally, the frequency domain vector is a DFT vector or a conjugate transpose vector of a DFT vector.

Optionally, the frequency domain vector is an oversampled DFT vector or a conjugate transpose vector of an oversampled DFT vector.

It should be understood that the foregoing example of a specific form of the frequency domain vector is merely an example, and shall not constitute any limitation on this application.

A person skilled in the art may understand that a DFT vector is a vector in a DFT matrix. Because the DFT matrix is a set of orthogonal basis vectors, any two vectors in the DFT matrix may be orthogonal to each other.

An oversampled DFT matrix may be obtained by oversampling a DFT matrix. Vectors in an oversampled DFT matrix may be divided into a plurality of subsets, any two DFT vectors in each subset may also be orthogonal to each other, and DFT vectors in different subsets may be non-orthogonal to each other.

4. Frequency domain unit: Frequency domain units may be used to represent different frequency domain resource granularities. For example, the frequency domain unit may include but is not limited to subband, resource block (resource block, RB), subcarrier, resource block group (resource block group, RBG), or precoding resource block group (precoding resource block group, PRG).

A channel corresponding to a frequency domain unit may be used to determine precoding corresponding to the frequency domain unit, for subsequent data transmission. For a terminal device, a channel corresponding to a frequency domain unit may be obtained by sounding a reference signal on the frequency domain unit. For a network device, a channel corresponding to a frequency domain unit may be determined based on channel information that corresponds to the frequency domain unit and that is fed back by a terminal device, or may be determined based on channel information that corresponds to a frequency domain unit near the frequency domain unit and that is fed back by a terminal device. This is not limited in this application.

In embodiments of this application, a channel corresponding to a frequency domain unit may be referred to as a channel of the frequency domain unit for short.

5. Compressed sensing: Compressed sensing is also referred to as compressed sampling or sparse sampling, is a technique for finding a sparse solution to an underdetermined linear system, and is used to obtain and reconstruct a sparse or compressible signal. For application in channel information feedback, at an encoding end of compressed sensing, the channel information is first converted into sparse delay domain channel information through a Fourier transform (corresponding to a dictionary matrix in compressed sensing), and then the sparse delay domain channel information is multiplied by an observation matrix and converted into a low-dimensional representation. In this way, compression (or encoding) from a high dimension to a low dimension is implemented.

At a decoding end of compressed sensing, conventionally, the channel information is usually restored by using an iterative method. Common decoding methods include orthogonal matching pursuit (orthogonal matching pursuit, OMP), approximate message passing (approximate message passing, AMP), and the like. It should be noted that in recent years, as data-driven artificial intelligence technologies develop, a new compressed sensing decoding solution is as follows: expanding a conventional iterative algorithm, to form a decoding network guided by a conventional method; and performing training by using data, to obtain a parameter of the decoding network. For example, a typical algorithm is learned approximate message passing (LAMP).

6. Neural network: A neural network is an algorithmic mathematical model that imitates a behavioral feature of a neural network of an animal and performs distributed parallel information processing. The neural network may include a neural unit. The neural unit may be a computation unit with $x_s$ and an intercept of 1 as inputs. An output of the computation unit may be as follows:

$$h_{W,b}(x) = f(W^T x) = f\left(\sum_{s=1}^{n} W_s x_s + b\right) \quad (1)$$

s = 1, 2, ..., n; n is a natural number greater than 1; $W_s$ is a weight of $x_s$; b is a bias of the neural unit; and f is an activation function of the neural unit, and is used to introduce a nonlinear feature into the neural network, to convert an input signal in the neural unit into an output signal. The output signal of the activation function may be used as an input of a next convolutional layer. The activation function may be a sigmoid, Tanh, Relu, or LeakyRelu function, or the like. The neural network is a network constituted by linking a plurality of single neural units together. To be specific, an output of one neural unit may be an input of another neural unit. An input of each neural unit may be connected to a local receptive field of a previous layer, to extract a feature of the local receptive field. The local receptive field may be a region including several neural units.

As an example rather than a limitation, in this embodiment, a reference signal may be used for channel sounding, and may be further used for demodulation. For example, the reference signal in this embodiment of the present invention may include a demodulation reference signal (demodulation reference signal, DMRS).

It should be understood that, that the reference signal is used as a reference signal used for channel sounding or channel estimation is merely an example for description, and shall not constitute any limitation on embodiments of the present invention. In this application, a possibility is not excluded that another name is used in an existing or future protocol to replace the reference signal to implement a function the same as or similar to a function of the reference signal.

Currently, an access network device may obtain CSI by sending a CSI-RS to a terminal device. FIG. 2 is a schematic diagram of an example of a structure in which an access network device obtains CSI by sending a CSI-RS.

As an antenna quantity and a bandwidth increase, CSI increases accordingly. Therefore, when being fed back, the CSI needs to be compressed and decompressed, which may also be referred to as encoded and decoded, to save valuable air interface transmission resources. Currently, there are three common CSI encoding and decoding technologies: codebook-based CSI feedback, compressed sensing-based encoding and decoding, and artificial intelligence-based encoding and decoding.

In a codebook-based CSI feedback solution, after obtaining a CSI matrix through estimation, a receive end performs a Fourier transform on the CSI matrix, that is, converts the CSI matrix into sparse delay information, then selects some strong beams based on the sparse delay information, performs quantization, selects an appropriate indicator based on a preconfigured codebook, and feeds the indicator back to a transmit party. In the codebook-based CSI feedback solution, CSI is encoded through beam selection and quantization, and secondary information is discarded directly. As a result, a large amount of useful information is lost, precision of restoring the CSI is poor, and a channel capacity is negatively affected.

FIG. 2 is a schematic diagram of an example of a compressed sensing-based CSI feedback structure. In a compressed sensing-based CSI feedback solution, at an encoding end of compressed sensing, channel information first passes through a compressed sensing encoding module, for example, is first multiplied by a dictionary matrix, to convert the channel information into sparse delay channel information, and then the sparse delay information is multiplied by an observation matrix and converted into a low-dimensional representation. In this way, encoding is implemented.

In a compressed sensing-based decoding solution, a compressed sensing decoding module is used. For example, channel information is usually restored by using an iterative method. Common decoding methods include orthogonal matching pursuit (orthogonal matching pursuit, OMP), approximate message passing (approximate message passing, AMP), and the like. It should be noted that as data-driven artificial intelligence technologies develop, a new compressed sensing decoding solution, for example, a learned approximate message passing (LAMP) algorithm, is as follows: expanding a conventional iterative algorithm, to form a decoding network guided by a conventional method; and performing training by using data, to obtain a parameter of the decoding network.

In the compressed sensing-based CSI feedback solution, for a signal that can be encoded or that is sparse in a transform domain, a high-dimensional signal may be mapped to a low-dimensional space, to sample the signal at a frequency far lower than a Nyquist sampling frequency. When this solution is compared with the codebook-based solution, a high-quality restored signal is obtained by using this solution. This solution can obtain good encoding and decoding performance with a small amount of computation, and has good adaptability to various channel environments, that is, has a good generalization capability. In this solution, the channel information is mapped to a low-dimensional representation at the encoding end by using linear transforms such as a Fourier transform and matrix multiplication. However, the linear transforms have limited capabilities in extracting an information feature. When a compression ratio is high, encoding and decoding capabilities of this solution are poor, and restored channel information is distorted greatly.

In an artificial intelligence-based CSI feedback solution, data-driven artificial intelligence technologies represented by deep learning have powerful feature extraction capabilities, and can obtain better results in channel information encoding and decoding. For example, when an encoding end uses a CsiNet module that includes one layer of a $3\times3$ convolutional neural network and one layer of a fully connected linear layer network, and a decoding end uses a plurality of RefineNet modules that are superimposed, performance of an artificial intelligence-based encoding and decoding solution can exceed performance of a current compressed sensing-based channel information encoding and decoding solution. However, in the artificial intelligence-based encoding and decoding solution, there is a large amount of computation, a large amount of training data is required, a neural network obtained through training mainly reflects features of the training data usually, and this solution performs poorly for data whose features differ significantly from features of the training data.

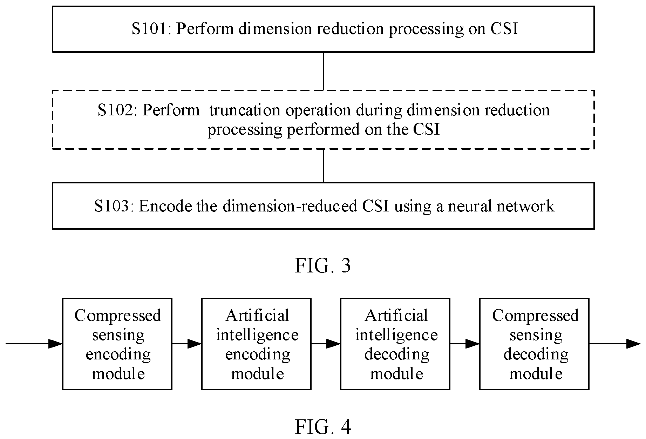

FIG. 3 is a schematic flowchart of an example of a CSI feedback method 100.

S101: Perform dimension reduction processing on CSI, to generate dimension-reduced CSI.

For example, dimension reduction processing is performed on the CSI in a compressed sensing manner. For example, the CSI is multiplied by a dictionary matrix. The dictionary matrix is used to obtain sparse CSI. The dictionary matrix may be a DFT or FFT transform matrix, or may be another particularly designed matrix. This is not limited in this application.

After being multiplied by the dictionary matrix, the CSI may be multiplied by an observation matrix. The observation matrix is used to implement dimension reduction for the CSI, to obtain the dimension-reduced CSI. The observation matrix may be a Gaussian random sampling matrix, or may be a matrix obtained by training data using a gradient descent method in deep learning, or may be another particularly designed matrix. This is not limited in this application.

The dictionary matrix and the observation matrix are non-sparse matrices, that is, non-zeros in the matrix account for more than 50%.

For example, dimension reduction processing is performed on the CSI using a neural network that includes a fully connected linear layer, to generate the dimension-reduced CSI.

It should be noted that the fully connected linear layer is mathematically presented as matrices being multiplied. Fully connected means that the matrices are non-sparse matrices. Therefore, performing dimension reduction processing on the CSI using a neural network may be understood as multiplying the CSI linearly by at least one matrix. For example, a first layer of the neural network is a DFT or fast Fourier transform (fast Fourier transform, FFT) calculation matrix, and a second layer is the Gaussian random sampling matrix.

A plurality of matrices may also be combined, to form matrices being multiplied. A plurality of fully connected linear layers being connected in series may also be equivalent to one fully connected linear layer.

Optionally, S102: Perform truncation operation during dimension reduction processing performed on the CSI.

That is, in the process in which the CSI is multiplied linearly by at least one matrix, after being multiplied by one of the matrices, the CSI may be truncated and then multiplied linearly by a next matrix.

For example, after being multiplied by the dictionary matrix, the CSI is truncated and then multiplied by the observation matrix. It should be noted that because information obtained after the CSI is multiplied linearly by the dictionary matrix is highly sparse, a direct truncation manner may be used to further reduce a dimension of the information.

For example, after the CSI is input into one of fully connected linear layers of a neural network, the CSI is truncated and then enters a next layer.

S103: Encode the dimension-reduced CSI again using a neural network.

Optionally, the neural network may be obtained by connecting dimension reduction processing and the neural network in series and performing joint training, or may be understood as being obtained by cascading dimension reduction processing and the neural network and performing joint training.

It should be noted that a dimension of the dimension-reduced CSI is related to an input parameter of the neural network, and a parameter of a matrix used in dimension reduction processing needs to correspond to a dimension of the input parameter of the neural network.

It should be noted that when the dimension-reduced CSI is encoded using a neural network, the neural network may include a nonlinear activation function. The activation function may be Sigmoid, Tanh, Relu, LeakyRelu, or the like. The neural network may further include convolution, full connection, pooling, or batch normalization. This is not limited in this application.

It should be noted that in a solution in which dimension reduction processing is performed on CSI using a fully connected linear layer of a neural network, and dimension-reduced CSI is encoded using a neural network, an encoding structure in this application may be presented as a holistic trainable neural network. A first layer to an $N^{th}$ layer of the neural network are fully connected linear operation layers, and an $(N+1)^{th}$ layer to a $P^{th}$ layer may include nonlinear activation functions.

A decoding side of the CSI feedback method 100 in this application may include two cascaded structures, which are sequentially a neural network-oriented decoding structure and a dimension reduction processing-oriented decoding structure. The neural network may include a nonlinear activation function. The activation function may be Sigmoid, Tanh, Relu, LeakyRelu, or the like. The neural network may further include convolution, full connection, pooling, or batch normalization. This is not limited in this application.

When dimension reduction processing is performed on the CSI in the compressed sensing manner, the dimension reduction processing-oriented decoding structure may be a conventional OMP algorithm or AMP algorithm, or a data-driven compressed sensing decoding algorithm, that is, a decoding structure formed by expanding an iterative algorithm, for example, a learned approximate message passing LAMP algorithm. In the structure, a parameter of the structure may be obtained by performing training by using data. For an encoding and decoding structure in this case, refer to FIG. 4. CSI passes through a compressed sensing encoding module and an artificial intelligence encoding module sequentially. The two modules implement partial compression ratios separately. At a decoding end, data passes through an artificial intelligence decoding module and a compressed sensing decoding module sequentially. First, partial data is restored using an artificial intelligence method, and then data is restored using a compressed sensing method.

When dimension reduction processing is performed on the CSI using a neural network that includes a fully connected linear layer, the dimension reduction processing-oriented decoding structure may alternatively be a decoding structure that is based on a neural network. That is, a decoding structure in this case may be alternatively considered as a holistic trainable neural network.

It should be noted that all the foregoing neural networks are obtained through training using training data. In a possible implementation, a dimension reduction processing structure, the neural network, the neural network-oriented decoding structure, and the dimension reduction processing-oriented decoding structure may be connected in series for end-to-end joint training.

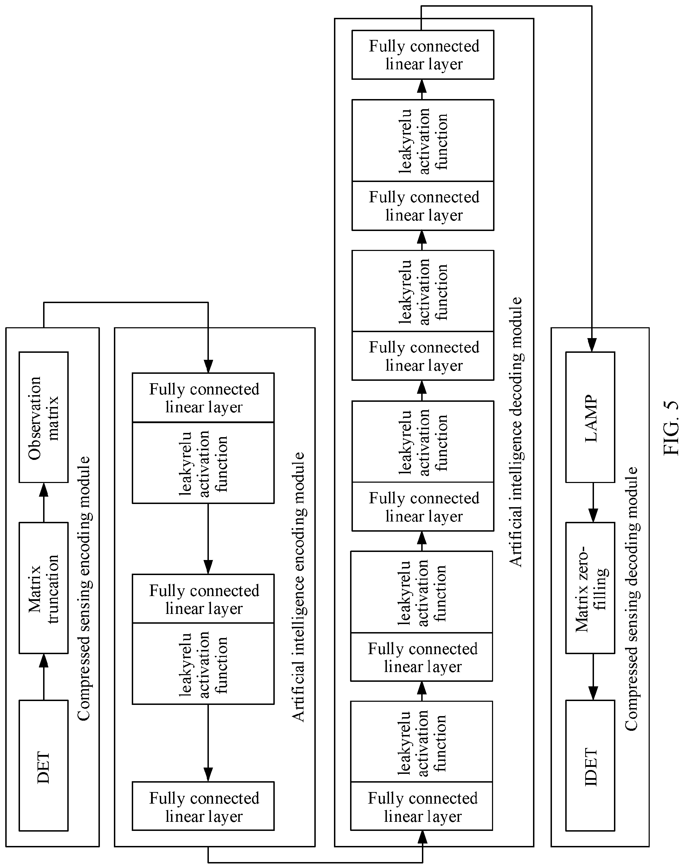

To elaborate, FIG. 5 is a schematic diagram of an example of a specific CSI feedback structure. The schematic diagram of the structure is used merely as an example and does not constitute any limitation on this application.

The following describes a working process of the CSI feedback structure shown in FIG. 4, by using an example in which an access network device has 32 antennas and provides 1024 carriers, a terminal device has one receive antenna, and time-domain CSI estimated by the terminal device is a 1024×32×2 three-dimensional matrix. The following description does not constitute any limitation on this application.

The 1024×32×2 three-dimensional matrix of the time-domain CSI passes through a compressed sensing encoding module. The compressed sensing encoding module includes a DFT module and an observation matrix module. Optionally, a matrix truncation module may be further included between the DFT module and the observation module.

The time-domain CSI enters the DFT module for DFT transform and is converted into a sparse three-dimensional matrix. That is, a dimension in this case does not change, and is still 1024×32×2.

Optionally, because the three-dimensional matrix that undergoes DFT transform is sparse, the three-dimensional matrix may be truncated to 32×32×2.

A dimension of the truncated CSI matrix is readjusted into a 2048×1 vector. Then, the vector is multiplied by an observation matrix. In this way, a CSI encoded vector that is formed after compression in a compressed sensing manner is performed, that is, an example of second information in this application, is obtained. The observation matrix may be obtained through Gaussian random sampling. For example, if a dimension of the observation matrix is 2048×512, a dimension of the CSI encoded vector that is formed after encoding in a compressed sensing manner is performed is 512×1.

The CSI encoded vector that is formed after encoding in a compressed sensing manner is performed enters an AI encoding module. Herein, a "(fully connected+LeakyRELU)×2+fully connected" structure is used as an example, to implement level-2 encoding for the CSI and form a feedback vector.

At a decoding end, first, there is a decoding module that is oriented to the AI encoding module. Herein, a "(fully connected+LeakyRELU)×5+fully connected" structure is used as an example, to implement level-1 decoding for the CSI and obtain a 512×1 vector that is equivalent to the decoding end. Then, the vector enters a decoding module that is oriented to the compressed sensing encoding module, that is, enters an AMP algorithm module, and a 2048×1 vector is obtained. Then, dimension readjustment is performed, and a 32×32×2 matrix is obtained. Then, a zero filling operation that corresponds to the truncation operation performed at the encoding end is performed, and a 1024×32×2 matrix is obtained. Finally, the matrix passes through an IDFT, and the restored time-domain CSI matrix is obtained.

It can be learned based on this embodiment that in the solution for which this application claims protection, when a terminal device feeds CSI back to an access network device, extremely valuable air interface resources can be saved, and an overall amount of computation can be reduced.

In the foregoing embodiment, the CSI is encoded and then fed back to the access network device, reducing resources. This application provides an implementation of encoding a CSI-RS, reducing computation-caused power consumption of a terminal device while saving resources.

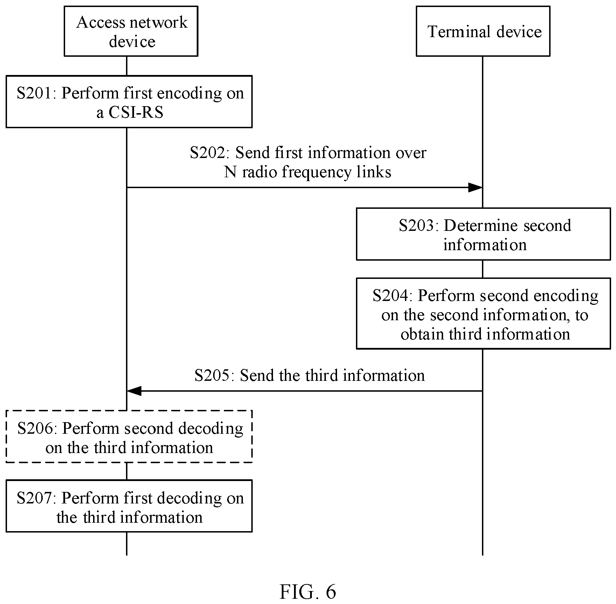

FIG. 6 is a schematic flowchart of an example of a method 200 for encoding a CSI-RS on an access network device side.

S201: An access network device performs first encoding on a CSI-RS, to generate first information.

The CSI-RS is used to obtain CSI corresponding to a channel between the access network device and a terminal device.

In a possible implementation, the access network device performs the first encoding on the CSI-RS in a compressed sensing manner.

For example, for N radio frequency links (radio frequency chain, RFC), the access network device reserves only M groups of resources. N and M are both positive integers. M may be far less than N. Encoding the CSI-RS in the compressed sensing manner may be understood as mapping the CSI-RS to the radio frequency links in the compressed sensing manner. That is, M CSI-RSs may be mapped to the N radio frequency links by using a sensing matrix A (for example, a dimension of the matrix is M×N) in compressed sensing.

In other words, if the access network device does not encode the CSI-RS, the access network device needs to use N resources to transmit the CSI-RS over the N radio frequency links, and the terminal device observes an N×F×2 CSI-RS matrix to obtain a CSI matrix. In this application, the CSI-RS may be encoded by using the (M×N) (M<N)-dimensional sensing matrix A, which is equivalent to multiplying the sensing matrix A before the CSI-RS matrix. In this case, the terminal device observes an M×F×2 CSI-RS matrix, and the access network needs to use only M resources to transmit the CSI-RS over the N radio frequency links. F represents a quantity of sampling points of the channel. 2 represents a real part and an imaginary part of an element in the CSI matrix. The foregoing description is used merely as an example. In this application, the CSI-RS is encoded in the compressed sensing manner, reducing occupation of resources during transmission of the CSI-RS. The parameter F may alternatively be a combination of other parameters. This is not limited in this application.

The sensing matrix A may be a Gaussian random sampling matrix, or may be a matrix obtained by training data using a gradient descent method in deep learning, or may be another particularly designed matrix. This is not limited in this application.

It should be noted that the sensing matrix A may be alternatively presented as a form of a plurality of matrices being multiplied. This is not limited in this application.

In another possible implementation, the access network device performs the first encoding on the CSI-RS using a neural network that includes a fully connected linear layer, to generate the first information.

It should be noted that the fully connected linear layer is mathematically presented as matrices being multiplied. Fully connected means that the matrices are non-sparse matrices. Therefore, performing the first encoding on the CSI-RS using a neural network may be understood as multiplying the CSI-RS linearly by at least one matrix. For example, in some embodiments, a first layer of the neural network is a DFT or fast Fourier transform calculation matrix, and a second layer is the Gaussian random sampling matrix. That is, the CSI-RS is multiplied linearly by two matrices.

A plurality of matrices may also be combined, to form a matrix obtained through multiplication. A plurality of fully connected linear layers being connected in series may also be equivalent to one fully connected linear layer.

S202: The access network device sends the first information to the terminal device over the N radio frequency links.

Correspondingly, the terminal device receives the first information that is sent by the access network device to the terminal device over the N radio frequency links.

It should be noted that after the first information is transmitted over the N radio frequency links, the information received by the terminal device already implicitly includes the CSI.

In other words, what the terminal device receives is the CSI-RS on which the first encoding is performed and that is sent over the N radio frequency links by using the M resources, and what the terminal device observes is a matrix Y=A×H that is obtained by multiplying the sensing matrix by the CSI matrix. That is, the CSI matrix H is implicitly included in the matrix Y.

S203: The terminal device determines second information based on the first information and the CSI-RS.

In a possible implementation, after the access network device sends the CSI-RS on which the first encoding is performed to the terminal device over the N radio frequency links by using the M resources, the terminal device observes the CSI-RS on which the first encoding is performed, and then determines the second information that implicitly includes the CSI.

For example, after receiving the first information transmitted over the N radio frequency links by using the M resources, the terminal device may generate the second information based on the first information and the CSI-RS. The CSI-RS may be preconfigured in the terminal device. To be specific, the terminal device may determine, based on the compressed CSI-RS transmitted on the channel and the known CSI-RS, the second information that implicitly includes the CSI.

It should be noted that that the terminal device feeds the CSI back to the access network device may be understood as feeding a result of observing the first information back to the access network device, that is, a result of observing the CSI-RS that is transmitted over the N radio frequency links by using the M resources. The CSI is obtained through decoding on an access network device side.

S204: The terminal device performs second encoding on the second information, to generate third information.

Optionally, the second encoding may be encoding that is based on a first neural network. That is, the terminal device encodes the second information using a neural network, that is, the first neural network, to generate the third information.

A parameter of the first neural network is related to the quantity F of sampling points of the channel and the quantity M of resources occupied by the first information, F and M are both positive integers, and the resource includes at least one of the following resources: a time domain resource, a frequency domain resource, or a code domain resource.

For example, the second information may be understood as the matrix Y that includes the CSI matrix H. If the (M×N)-dimensional sensing matrix A is used for the first encoding, Y=A×H.

A dimension of the CSI matrix H may be N×F×2, where N represents a quantity of the radio frequency links of the access network device, F represents the quantity of sampling points of the channel, M represents the quantity of resources occupied by the first information that is obtained after compression is performed, and 2 represents a real part and an imaginary part of an element in the CSI matrix. Therefore, it can be learned that a dimension of the matrix Y is M×F×2. In other words, a dimension of an input matrix of the first neural network is M×F×2. The parameter of the first neural network is related to the quantity F of sampling points of the channel and the quantity M of resources occupied by the first information.

It should be noted that when the first encoding is encoding that is based on a neural network including a fully connected linear layer, the fully connected linear layer may be alternatively presented as a form of a matrix. Therefore, the dimension of the input matrix of the first neural network is similar to that described above. Details are not described herein again.

S205: The terminal device sends third information to the access network device. Correspondingly, the access network device receives the third information from the terminal device.

In a possible implementation, if the terminal device performs the second encoding on the second information to generate the third information, S206 is performed in which the access network device performs second decoding on the third information.

The second decoding corresponds to the second encoding performed by the terminal device on the second information.

For example, the terminal device performs the second encoding on the (M×F×2)-dimensional matrix Y. After the second decoding is performed, the third information may be restored to the matrix Y.

For example, the second decoding may be decoding that is based on a neural network. The neural network may include at least one layer of nonlinear activation function operation, for example, a sigmoid, Tanh, Relu, or LeakyRelu function. The neural network may further include other operations such as convolution, full connection, pooling, and batch normalization.

S207: The terminal device performs first decoding on the third information.

In a possible implementation, the access network device performs the first encoding on the CSI-RS to generate the first information, the terminal device determines the second information based on the first information and the CSI-RS, and the terminal device sends the third information to the access network device, where the second information and the third information are the same. In this case, the first decoding is decoding that corresponds to the first encoding, for example, decoding that corresponds to encoding performed in the compressed sensing manner, or decoding that corresponds to encoding performed using the second neural network that includes a fully connected linear layer.

The decoding that corresponds to encoding performed in the compressed sensing manner may use a conventional OMP or AMP algorithm, or a data-driven compressed sensing decoding algorithm, that is, a decoding structure formed by expanding a conventional iterative algorithm, for example, a LAMP algorithm. A parameter of the decoding structure may be obtained by performing training by using data.

The decoding that corresponds to encoding performed using the second neural network may be decoding that is based on a neural network. The neural network may include at least one layer of nonlinear activation function operation, for example, a sigmoid, Tanh, Relu, or LeakyRelu function. The neural network may further include other operations such as convolution, full connection, pooling, and batch normalization.

In another possible implementation, the access network device performs the first encoding on the CSI-RS to generate the first information, the terminal device determines the second information based on the first information and the CSI-RS, the terminal device performs the second encoding on the second information to generate the third information, and the access network device performs the second decoding on the third information. In this case, the first decoding is also only decoding that corresponds to the first encoding. That the access network device performs first decoding on the third information may be understood as performing the first decoding on the third information on which the second decoding is performed. A description of the first decoding is similar to the foregoing description. Details are not described herein again.

In another possible implementation, the access network device performs the first encoding on the CSI-RS to generate the first information, the terminal device determines the second information based on the first information and the CSI-RS, the terminal device performs the second encoding on the second information to generate the third information, but the access network device does not perform the decoding that corresponds to the second encoding on the third information. In this case, the first decoding may be understood as deep fusion of the decoding corresponding to the first encoding and the decoding corresponding to the second encoding, and may be presented as a decoding structure that is based on a deep neural network, instead of a form of two decoding structures being cascaded.

It should be noted that because a neural network may be used to decode data that is encoded in the compressed sensing manner, if the first encoding is encoding that is based on compressed sensing, the first decoding may be alternatively presented as a fused decoding structure.

Therefore, in this application, the access network device sends the encoded CSI-RS to the terminal device over the N radio frequency links; the terminal device does not need to decode the encoded CSI-RS, but performs encoding again and sends an encoding result to the access network device; and the access network device performs decoding to obtain the CSI. In this way, occupation of resources in a process of obtaining the CSI can be reduced.

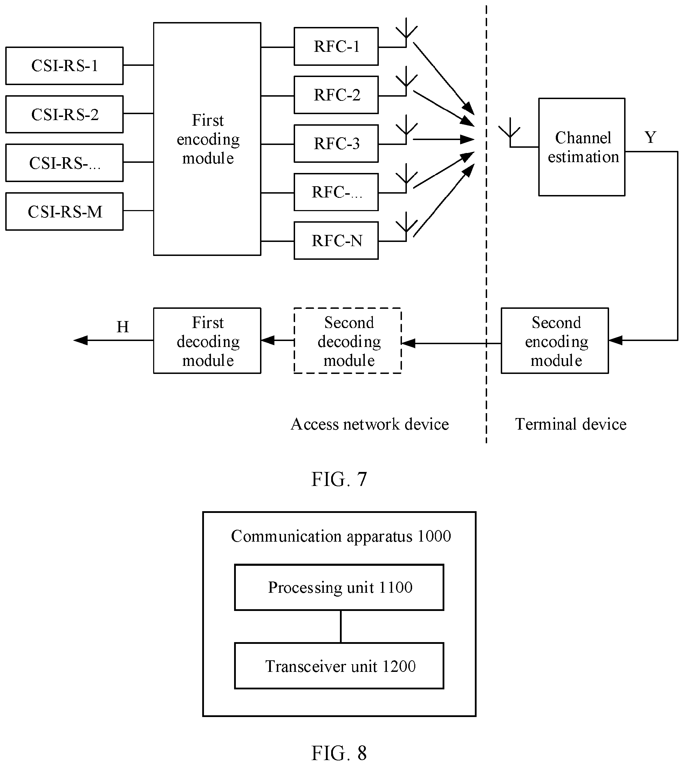

To elaborate, FIG. 7 is a schematic diagram of an example of a CSI obtaining structure. A first encoding module on a side of an access network device encodes CSI-RSs and sends the CSI-RSs to a terminal device over N radio frequency links RFC by using M resources. The terminal device performs channel estimation based on information sent over the N radio frequency links and determines a matrix Y. The matrix Y implicitly includes a CSI matrix H. The terminal device further includes a second encoding module, configured to: perform second encoding on the matrix Y, and send the matrix Y on which the second encoding is performed to the access network device. In a possible manner, the access network device includes a first decoding module. The first decoding module is configured to perform decoding that corresponds to the first encoding module, or the first decoding module is configured to perform decoding that corresponds to the first encoding module and the second encoding module. In another possible manner, the access network device includes a first decoding module and a second decoding module. The first decoding module is configured to perform decoding that corresponds to the first encoding module. The second decoding module is configured to perform decoding that corresponds to the second encoding module. The matrix Y on which the second encoding is performed first enters the second decoding module to restore the matrix Y, and then enters the first decoding module to obtain the CSI matrix H.

In addition, it should be noted that N, M, and the like in this application may also all be understood as N groups and M groups. This is not limited in this application.

FIG. 8 is a schematic block diagram of a data transmission apparatus according to an embodiment of this application. As shown in FIG. 8, the apparatus 1000 may include a processing unit 1100 and a transceiver unit 1200.

Optionally, the apparatus 1000 may correspond to an encoding apparatus in the foregoing method embodiments, for example, may be an encoder or a component (for example, a circuit, a chip, or a chip system) configured in an encoder.

It should be understood that the apparatus 1000 may correspond to an encoding device in the method according to embodiments of this application. The apparatus 1000 may include units configured to perform the method that is performed by an encoding device and that is in FIG. 3. In addition, the units in the apparatus 1000 and the foregoing other operations and/or functions are separately intended to implement corresponding procedures in FIG. 3.

When the apparatus 1000 is configured to perform the method in FIG. 3, the processing unit 1100 may be configured to perform the step in FIG. 3 of performing dimension reduction processing on CSI, and may be further configured to perform the step in FIG. 3 of encoding dimension-reduced CSI using a neural network; and the transceiver unit 1200 may be configured to receive the CSI. It should be understood that a specific process in which the units perform the foregoing corresponding steps is described in detail in the foregoing method embodiment. For brevity, details are not described herein again.

It should be understood that the communication apparatus 1000 may correspond to the terminal device according to embodiments of this application. The communication apparatus 1000 may include units configured to perform the method that is performed by the terminal device and that is in FIG. 6. In addition, the units in the communication apparatus 1000 and the foregoing other operations and/or functions are separately intended to implement corresponding procedures in FIG. 6.

When the communication apparatus 1000 is configured to perform the method 400 in FIG. 3, the processing unit 1100 may be configured to perform the step in FIG. 6 of determining second information based on first information and a CSI-RS, and the transceiver unit 1200 may be configured to perform the step in FIG. 6 of receiving the first information that is sent by an access network device over N radio frequency links. The first information is generated after first encoding is performed on the channel state information-reference signal CSI-RS. The CSI-RS is used to obtain channel information CSI. The processing unit 1100 may be further configured to perform the step in FIG. 6 of performing second encoding on the second information to generate third information. The transceiver unit 1200 may be further configured to perform the step in FIG. 6 of sending the third information to the access network device. The third information is used by the access network device to perform first decoding on the third information, to generate the CSI. The first decoding includes decoding corresponding to the first encoding. It should be understood that a specific process in which the units perform the foregoing corresponding steps is described in detail in the foregoing method embodiment. For brevity, details are not described herein again.

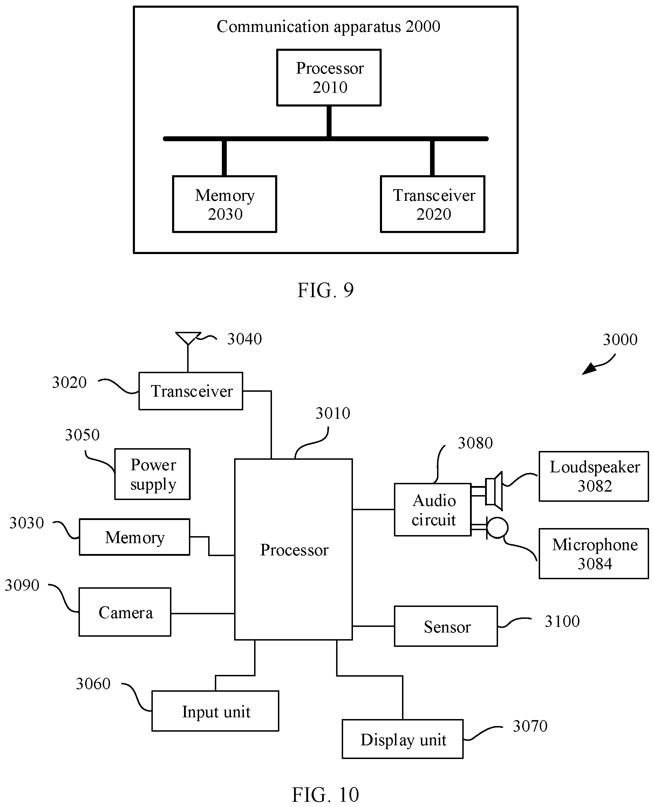

It should be further understood that when the apparatus 1000 is a terminal device, the transceiver unit 1200 in the apparatus 1000 may be implemented by a transceiver, for example, may correspond to a transceiver 2020 in an apparatus 2000 shown in FIG. 9 or a transceiver 3020 in a terminal device 3000 shown in FIG. 10; and the processing unit 1100 in the apparatus 1000 may be implemented by at least one processor, for example, may correspond to a processor 2010 in the apparatus 2000 shown in FIG. 9 or a processor 3010 in the terminal device 3000 shown in FIG. 10.

It should be further understood that when the apparatus 1000 is a chip or chip system configured in a terminal device, the transceiver unit 1200 in the apparatus 1000 may be implemented by an input/output interface, a circuit, or the like; and the processing unit 1100 in the apparatus 1000 may be implemented by a processor, a microprocessor, an integrated circuit, or the like integrated in the chip or chip system.

Optionally, the apparatus 1000 may correspond to a decoding device in the foregoing method embodiment, for example, may be a decoder or a component (for example, a circuit, a chip, or a chip system) configured in a decoder.

It should be understood that the apparatus 1000 may correspond to a decoding device according to embodiments of this application. The apparatus 1000 may include units configured to perform the method that is performed by the decoding device. In addition, the units in the apparatus 1000 and the foregoing other operations and/or functions are separately intended to implement corresponding operations of the method 400.

When the apparatus 1000 is configured to perform the method in FIG. 3, the processing unit 1100 may be configured to perform a step that is of decoding the encoded CSI using a neural network and that is in the method in FIG. 3, and the transceiver unit 1200 may be configured to perform a step that is of receiving the encoded CSI and that is in the method in FIG. 3. It should be understood that a specific process in which the units perform the foregoing corresponding steps is described in detail in the foregoing method embodiment. For brevity, details are not described herein again.

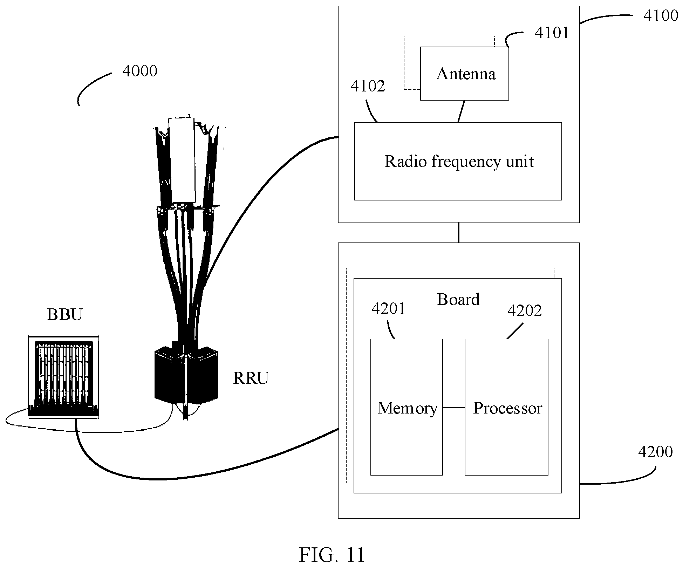

It should be further understood that when the apparatus 1000 is a decoding device, the transceiver unit 1200 in the apparatus 1000 may be implemented by a transceiver, for example, may correspond to a transceiver 2020 in an apparatus 2000 shown in FIG. 9 or an RRU 4100 in an access network device 4000 shown in FIG. 11; and the processing unit 1100 in the apparatus 1000 may be implemented by at least one processor, for example, may correspond to a processor 2010 in the apparatus 2000 shown in FIG. 9 or a processing unit 4200 or a processor 4202 in the base station 4000 shown in FIG. 11.

It should be further understood that when the apparatus 1000 is a chip or chip system configured in a network device, the transceiver unit 1200 in the apparatus 1000 may be implemented by an input/output interface, a circuit, or the like; and the processing unit 1100 in the apparatus 1000 may be implemented by a processor, a microprocessor, an integrated circuit, or the like integrated in the chip or chip system.

It should be understood that the communication apparatus 1000 may correspond to the access network device in FIG. 6 according to embodiments of this application. The communication apparatus 1000 may include units configured to perform the method that is performed by the access network device and that is in FIG. 6. In addition, the units in the communication apparatus 1000 and the foregoing other operations and/or functions are separately intended to implement corresponding procedures in the method in FIG. 6.

When the communication apparatus 1000 is configured to perform the method in FIG. 6, the processing unit 1100 may be configured to perform the step in FIG. 6 of performing first encoding on a channel state information-reference signal CSI-RS to generate first information, where the CSI-RS is used to obtain channel state information CSI corresponding to a channel between the access network device and a terminal device; the transceiver unit 1200 may be configured to perform the step in FIG. 6 of sending the first information to the terminal device over N radio frequency links, where N is a positive integer; the transceiver unit 1200 is further configured to perform the step in FIG. 6 of receiving third information from the terminal device, where the third information is generated by the terminal device after the terminal device performs second encoding on second information, and the second information is determined by the terminal device based on the first information and the CSI-RS; and the processing unit 1100 may be further configured to perform the step in FIG. 6 of performing first decoding on the third information to generate the CSI, where the first decoding includes decoding corresponding to the first encoding. It should be understood that a specific process in which the units perform the foregoing corresponding steps is described in detail in the foregoing method embodiment. For brevity, details are not described herein again.

It should be further understood that when the communication apparatus 1000 is an access network device, the transceiver unit 1200 in the communication apparatus 1000 may be implemented by a transceiver, for example, may correspond to a transceiver 2020 in a communication apparatus 2000 shown in FIG. 9 or an RRU 4100 in a base station 4000 shown in FIG. 11; and the processing unit 1100 in the communication apparatus 1000 may be implemented by at least one processor, for example, may correspond to a processor 2010 in the communication apparatus 2000 shown in FIG. 9 or a processing unit 4200 or a processor 4202 in the base station 4000 shown in FIG. 11.

It should be further understood that when the communication apparatus 1000 is a chip or chip system configured in a network device, the transceiver unit 1200 in the communication apparatus 1000 may be implemented by an input/output interface, a circuit, or the like; and the processing unit 1100 in the communication apparatus 1000 may be implemented by a processor, a microprocessor, an integrated circuit, or the like integrated in the chip or chip system.

FIG. 9 is another schematic block diagram of an apparatus 2000 according to an embodiment of this application. As shown in FIG. 9, the apparatus 2000 includes a processor 2010, a transceiver 2020, and a memory 2030. The processor 2010, the transceiver 2020, and the memory 2030 communicate with each other via an internal connection path. The memory 2030 is configured to store instructions. The processor 2010 is configured to execute the instructions stored in the memory 2030, to control the transceiver 2020 to send a signal and/or receive a signal.

It should be understood that the apparatus 2000 may correspond to the terminal device in the foregoing method embodiments, and may be configured to perform the steps and/or procedures performed by the network device or the terminal device in the foregoing method embodiments. Optionally, the memory 2030 may include a read-only memory and a random access memory, and provide instructions and data to the processor. A part of the memory may further include a nonvolatile random access memory. The memory 2030 may be a separate component, or may be integrated in the processor 2010. The processor 2010 may be configured to execute the instructions stored in the memory 2030. In addition, when the processor 2010 executes the instructions stored in the memory, the processor 2010 is configured to perform the steps and/or procedures corresponding to the network device or the terminal device in the foregoing method embodiments.

Optionally, the apparatus 2000 is the terminal device in the foregoing embodiments.

Optionally, the apparatus 2000 is the network device in the foregoing embodiments.

The transceiver 2020 may include a transmitter and a receiver. The transceiver 2020 may further include an antenna. There may be one or more antennas. The processor 2010, the memory 2030, and the transceiver 2020 may be devices integrated in different chips. For example, the processor 2010 and the memory 2030 may be integrated in a baseband chip, while the transceiver 2020 may be integrated in a radio frequency chip. The processor 2010, the memory 2030, and the transceiver 2020 may alternatively be devices integrated in a same chip. This is not limited in this application.

Optionally, the apparatus 2000 is a component configured in a terminal device, for example, a circuit, a chip, or a chip system.

Optionally, the apparatus 2000 is a component configured in a network device, for example, a circuit, a chip, or a chip system.

The transceiver 2020 may alternatively be a communication interface, for example, an input/output interface or a circuit. The transceiver 2020, the processor 2010, and the memory 2020 may all be integrated in a same chip, for example, integrated in a baseband chip.

FIG. 10 is a schematic diagram of a structure of a terminal device 3000 according to an embodiment of this application. The terminal device 3000 may be used in the system shown in FIG. 1, and performs a function of the terminal device in the foregoing method embodiments. As shown in the figure, the terminal device 3000 includes a processor 3010 and a transceiver 3020. Optionally, the terminal device 3000 further includes a memory 3030. The processor 3010, the transceiver 3020, and the memory 3030 may communicate with each other via an internal connection path, to transfer a control signal and/or a data signal. The memory 3030 is configured to store a computer program. The processor 3010 is configured to invoke the computer program from the memory 3030 and run the computer program, to control the transceiver 3020 to receive/send a signal. Optionally, the terminal device 3000 may further include an antenna 3040, configured to send, by using a radio signal, uplink data or uplink control signaling output by the transceiver 3020.

The processor 3010 and the memory 3030 may be combined into a processing apparatus. The processor 3010 is configured to execute program code stored in the memory 3030, to implement the foregoing function. During specific implementation, the memory 3030 may be alternatively integrated in the processor 3010, or may be independent of the processor 3010. The processor 3010 may correspond to the processing unit 1100 in FIG. 8 or the processor 2010 in FIG. 9.

The transceiver 3020 may correspond to the transceiver unit 1200 in FIG. 8 or the transceiver 2020 in FIG. 9. The transceiver 3020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device 3000 shown in FIG. 7 can implement processes related to the terminal device in the method embodiment shown in FIG. 3 or FIG. 6. Operations and/or functions of the modules in the terminal device 3000 are separately intended to implement corresponding procedures in the foregoing method embodiments. For details, refer to the descriptions in the foregoing method embodiments. To avoid repetition, a detailed description is appropriately omitted herein.

The processor 3010 may be configured to perform an action that is implemented inside the terminal device and that is described in the foregoing method embodiments. The transceiver 3020 may be configured to perform an action that is of the terminal device sending information to or receiving information from the network device and that is described in the foregoing method embodiments. For details, refer to the descriptions in the foregoing method embodiments. Details are not described herein again.

Optionally, the terminal device 3000 may further include a power supply 3050, configured to supply power to various devices or circuits in the terminal device.

Besides, to make functions of the terminal device to be more complete, the terminal device 3000 may further include one or more of an input unit 3060, a display unit 3070, an audio circuit 3080, a camera 3090, a sensor 3100, and the like. The audio circuit may further include a loudspeaker 3082, a microphone 3084, and the like.

FIG. 11 is a schematic diagram of a structure of an access network device according to an embodiment of this application, for example, may be a schematic diagram of a structure of a base station. The base station 4000 may be used in the system shown in FIG. 1, and performs a function of the access network device in the foregoing method embodiments. As shown in the figure, the base station 4000 may include one or more radio frequency units, for example, a remote radio unit (remote radio unit, RRU) 4100, and one or more baseband units (BBU) (which may also be referred to as a distributed unit (DU)) 4200. The RRU 4100 may be referred to as a transceiver unit, and may correspond to the transceiver unit 1200 in FIG. 5 or the transceiver 2020 in FIG. 6. Optionally, the RRU 4100 may also be referred to as a transceiver machine, a transceiver circuit, a transceiver, or the like, and may include at least one antenna 4101 and a radio frequency unit 4102. Optionally, the RRU 4100 may include a receiver unit and a transmitter unit. The receiver unit may correspond to a receiver (which is also referred to as a receiver machine or a receiver circuit). The transmitter unit may correspond to a transmitter (which is also referred to as a transmitter machine or a transmitter circuit). The RRU 4100 part is mainly configured to receive and transmit radio frequency signals and perform conversion between a radio frequency signal and a baseband signal, for example, configured to send indication information to a terminal device. The BBU 4200 part is mainly configured to perform baseband processing, control the base station, and the like. The RRU 4100 and the BBU 4200 may be disposed together physically, or may be separately disposed physically, that is, a distributed base station.

The BBU 4200 is a control center of the base station, may also be referred to as a processing unit, may correspond to the processing unit 1100 in FIG. 8 or the processor 2010 in FIG. 9, and is mainly configured to perform baseband processing functions such as channel encoding, multiplexing, modulation, and spectrum spreading. For example, the BBU (the processing unit) may be configured to control the base station to perform an operation procedure related to the network device in the foregoing method embodiments, for example, generating the indication information.

In an example, the BBU 4200 may include one or more boards. The plurality of boards may jointly support a radio access network (for example, an LTE network) that uses a single access standard, or may separately support radio access networks (for example, an LTE network, a 5G network, or another network) that use different access standards. The BBU 4200 further includes a memory 4201 and a processor 4202. The memory 4201 is configured to store necessary instructions and data. The processor 4202 is configured to control the base station to perform a necessary action, for example, configured to control the base station to perform an operation procedure related to the network device in the foregoing method embodiments. The memory 4201 and the processor 4202 may serve one or more boards. To be specific, a memory and a processor may be disposed on each board. Alternatively, a plurality of boards may share a same memory and a same processor. In addition, a necessary circuit may be further disposed on each board.

It should be understood that the base station 4000 shown in FIG. 11 can implement processes related to the access network device in the method embodiment shown in FIG. 2, FIG. 3, or FIG. 4. Operations and/or functions of the modules in the base station 4000 are separately intended to implement corresponding procedures in the foregoing method embodiments. For details, refer to the descriptions in the foregoing method embodiments. To avoid repetition, a detailed description is appropriately omitted herein.

The BBU 4200 may be configured to perform an action that is implemented inside the access network device and that is described in the foregoing method embodiments. The RRU 4100 may be configured to perform an action that is of the access network device sending information to or receiving information from the terminal device and that is described in the foregoing method embodiments. For details, refer to the descriptions in the foregoing method embodiments. Details are not described herein again.

It should be understood that the base station 4000 shown in FIG. 11 is merely a possible form of an access network device, and shall not constitute any limitation on this application. The method provided in this application may be applicable to other forms of access network device. For example, the access network device includes an AAU, may further include a CU and/or a DU, or includes a BBU and an adaptive radio unit (adaptive radio unit, ARU), or includes a BBU. Alternatively, the access network device may be customer premises equipment (customer premises equipment, CPE), or may be in another form. A specific form of the access network device is not limited in this application.

The CU and/or the DU may be configured to perform an action that is implemented inside the access network device and that is described in the foregoing method embodiments. The AAU may be configured to perform an action that is of the access network device sending information to or receiving information from the terminal device and that is described in the foregoing method embodiments. For details, refer to the descriptions in the foregoing method embodiments. Details are not described herein again.

This application further provides a processing apparatus, including at least one processor. The at least one processor is configured to execute a computer program stored in a memory, so that the processing apparatus performs the method performed by the terminal device or the access network device in any one of the foregoing method embodiments.

An embodiment of this application further provides a processing apparatus, including a processor and a communication interface. The communication interface is coupled to the processor. The communication interface is configured to input and/or output information. The information includes at least one of instructions and data. The processor is configured to execute a computer program, so that the processing apparatus performs the method performed by the terminal device or the access network device in any one of the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the terminal device or the access network device in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, the steps in the foregoing methods may be completed by an integrated logic circuit in a form of hardware or instructions in a form of software in the processor. The steps of the methods disclosed with reference to embodiments of this application may be directly implemented by a hardware processor, or may be implemented by using a combination of hardware in a processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that the processor in this embodiment of this application may be an integrated circuit chip and has a signal processing capability. In an implementation process, the steps in the foregoing method embodiments may be completed by an integrated logic circuit in a form of hardware or instructions in a form of software in the processor. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By using an example description but not a restrictive description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method performed by the terminal device or the method performed by the network device in the embodiment shown in FIG. 3.

According to the methods provided in embodiments of this application, this application further provides a computer-readable storage medium. The computer-readable storage medium stores program code. When the program code is run on a computer, the computer is enabled to perform the method performed by the terminal device or the method performed by the network device in the embodiment shown in FIG. 3.

According to the methods provided in embodiments of this application, this application further provides a system. The system includes one or more terminal devices and one or more network devices.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

In the foregoing embodiments, the terminal device may be used as an example of a receiving device, and the network device may be used as an example of a sending device. However, this shall not constitute any limitation on this application. For example, alternatively, the sending device and the receiving device may be both terminal devices or the like. Specific types of the sending device and the receiving device are not limited in this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, a computing device and an application that runs on a computing device may be both components. One or more components may reside within a process and/or a thread of execution, and a component may be located on a computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the internet interacting with another system by using a signal).

A person of ordinary skill in the art may be aware that in combination with examples described in embodiments disclosed in this specification, units and algorithm steps can be implemented by electronic hardware or a combination of computer software and electronic hardware. Whether the functions are performed by hardware or software depends on particular applications and design constraints of the technical solution. A professional technical person may use different methods to implement the described functions for each particular application, but it should not be considered that the implementation goes beyond the scope of this application.

A person skilled in the art may clearly understand that, for the purpose of convenient and brief description, for a specific work process of the system, apparatus, and unit described above, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1.  A data transmission method, wherein the method comprises:

    performing, by an access network device, first encoding on a channel state information-reference signal CSI-RS, to generate first information, wherein the CSI-RS is used to obtain channel state information CSI corresponding to a channel between the access network device and a terminal device;
    sending, by the access network device, the first information to the terminal device over N radio frequency links, wherein N is a positive integer;
    receiving, by the access network device, third information from the terminal device, wherein the third information is generated by the terminal device after the terminal device performs second encoding on second information, and the second information is determined by the terminal device based on the first information and the CSI-RS; and
    performing, by the access network device, first decoding on the third information, to generate the CSI, wherein the first decoding comprises decoding corresponding to the first encoding.

2. The method according to claim 1, wherein the method further comprises:

performing, by the access network device, second decoding on the third information, wherein the second decoding corresponds to the second encoding; and

the performing, by the access network device, first decoding on the third information comprises:

performing, by the access network device, the first decoding on the third information on which the second decoding is performed.

3. The method according to claim 1, wherein the first decoding further comprises decoding corresponding to the second encoding.

4. The method according to claim 2 or 3, wherein the second encoding is encoding that is based on a first neural network, a parameter of the first neural network is related to a quantity F of sampling points of the channel and a quantity M of resources occupied by the first information, M and F are positive integers, M<N, and the resource comprises at least one of the following: a time domain resource, a frequency domain resource, or a code domain resource.

5. The method according to claim 4, wherein the parameter of the first neural network is a dimension of an input matrix of the first neural network.

6. The method according to any one of claims 1 to 5, wherein the first encoding is encoding that is based on compressed sensing, the first encoding uses a first matrix, and a dimension of the first matrix is related to M and N.

7. The method according to any one of claims 1 to 5, wherein the first encoding is encoding that is based on a second neural network, the second neural network comprises a fully connected linear layer, and a parameter of the fully connected linear layer is related to M and N.

8. The method according to any one of claims 1 to 7, wherein the first decoding is decoding that is based on a third neural network, and a parameter of the third neural network is related to N, M, and F.

9. A data transmission method, wherein the method comprises:

receiving, by a terminal device, first information that is sent by an access network device to the terminal device over N radio frequency links, wherein the first information is generated by the access network device after the access network device performs first encoding on a channel state information-reference signal CSI-RS, and the CSI-RS is used to obtain channel state information CSI;

determining, by the terminal device, second information based on the first information and the CSI-RS;

performing, by the terminal device, second encoding on the second information, to generate third information; and

sending, by the terminal device, the third information to the access network device, wherein the third information is used by the access network device to perform first decoding on the third information, to generate the CSI, and the first decoding comprises decoding corresponding to the first encoding.

10. The method according to claim 9, wherein the third information is used by the access network device to perform the first decoding on the third information on which second decoding is performed, to generate the CSI, and the second decoding corresponds to the second encoding.

11. The method according to claim 9, wherein the first decoding further comprises decoding corresponding to the second encoding.

12. The method according to claim 10 or 11, wherein the second encoding is encoding that is based on a first neural network, a parameter of the first neural network is related to a quantity F of sampling points of a channel and a quantity M of resources occupied by the first information, M and F are positive integers, M<N, and the resource comprises at least one of the following: a time domain resource, a frequency domain resource, or a code domain resource.

13. The method according to claim 12, wherein the parameter of the first neural network is a dimension of an input matrix of the first neural network.

14. The method according to any one of claims 9 to 13, wherein the first encoding is encoding that is based on compressed sensing, the first encoding uses a first matrix, and a dimension of the first matrix is related to M and N.

15. The method according to any one of claims 9 to 13, wherein the first encoding is encoding that is based on a second neural network, the second neural network comprises a fully connected linear layer, and a parameter of the fully connected linear layer is related to M and N.

**16.** The method according to any one of claims 9 to 15, wherein the first decoding is decoding that is based on a third neural network, and a parameter of the third neural network is related to N, M, and F.

**17.** A data transmission apparatus, wherein the apparatus comprises:

a transceiver unit, configured to receive first information that is sent by an access network device over N radio frequency links, wherein the first information is generated by the access network device after the access network device performs first encoding on a channel state information-reference signal CSI-RS, and the CSI-RS is used to obtain channel information CSI; and
a processing unit, configured to determine second information based on the first information and the CSI-RS;
the processing unit is further configured to perform second encoding on the second information, to generate third information; and
the transceiver unit is further configured to send the third information to the access network device, wherein the third information is used by the access network device to perform first decoding on the third information, to generate the CSI, and the first decoding comprises decoding corresponding to the first encoding.

**18.** The apparatus according to claim 17, wherein the third information is used by the access network device to perform the first decoding on the third information on which second decoding is performed, to generate the CSI, and the second decoding corresponds to the second encoding.

**19.** The apparatus according to claim 17, wherein the first decoding further comprises decoding corresponding to the second encoding.

**20.** The apparatus according to any one of claims 17 to 19, wherein the second encoding is encoding that is based on a first neural network, a parameter of the first neural network is related to a quantity F of sampling points of a channel and a quantity M of resources occupied by the first information, M and F are positive integers, M<N, and the resource comprises at least one of the following: a time domain resource, a frequency domain resource, or a code domain resource.

**21.** The apparatus according to claim 20, wherein the parameter of the first neural network is a dimension of an input matrix of the first neural network.

**22.** The apparatus according to any one of claims 17 to 21, wherein the first encoding is encoding that is based on compressed sensing, the first encoding uses a first matrix, and a dimension of the first matrix is related to M and N.

**23.** The apparatus according to any one of claims 17 to 21, wherein the first encoding is encoding that is based on a second neural network, the second neural network comprises a fully connected linear layer, and a parameter of the fully connected linear layer is related to M and N.

**24.** The apparatus according to any one of claims 17 to 23, wherein the first decoding is decoding that is based on a third neural network, and a parameter of the third neural network is related to N, M, and F.

**25.** A processing apparatus, comprising at least one processor, wherein the at least one processor is configured to execute a computer program stored in a memory, so that the apparatus implements the method according to any one of claims 1 to 8 or the method according to any one of claims 9 to 16.

**26.** A computer-readable storage medium, comprising a computer program, wherein when the computer program is run on a computer, the computer is enabled to perform the method according to any one of claims 1 to 8 or the method according to any one of claims 9 to 16.

**27.** A computer program product, wherein when the computer program product is run on a computer, the computer is enabled to perform the method according to any one of claims 1 to 8 or the method according to any one of claims 9 to 16.

**28.** A chip system, comprising a processor and configured to invoke a computer program from a memory and run the computer program, so that a communication device with the chip system installed performs the method according to any one of claims 1 to 8 or the method according to any one of claims 9 to 16.

FIG. 1

FIG. 2

S101: Perform dimension reduction processing on CSI

S102: Perform truncation operation during dimension reduction processing performed on the CSI

S103: Encode the dimension-reduced CSI using a neural network

FIG. 3

| Compressed sensing encoding module | Artificial intelligence encoding module | Artificial intelligence decoding module | Compressed sensing decoding module |

FIG. 4

Compressed sensing encoding module

DET → Matrix truncation → Observation matrix

Artificial intelligence encoding module

Fully connected linear layer ← leakyrelu activation function ← Fully connected linear layer ← leakyrelu activation function ← Fully connected linear layer

Artificial intelligence decoding module

Fully connected linear layer → leakyrelu activation function → Fully connected linear layer → leakyrelu activation function → Fully connected linear layer → leakyrelu activation function → Fully connected linear layer → leakyrelu activation function → Fully connected linear layer → leakyrelu activation function → Fully connected linear layer

Compressed sensing decoding module

IDET ← Matrix zero-filling ← LAMP

FIG. 5

```
┌─────────────────┐                           ┌─────────────────┐
│  Access network │                           │ Terminal device │
│     device      │                           │                 │
└─────────────────┘                           └─────────────────┘
         │                                              │
┌─────────────────────────────┐                         │
│ S201: Perform first encoding │                        │
│        on a CSI-RS           │                         │
└─────────────────────────────┘                         │
         │                                              │
         │  S202: Send first information over            │
         │        N radio frequency links               │
         │──────────────────────────────────────────────>│
         │                                              │
         │              ┌──────────────────────────────────┐
         │              │ S203: Determine second           │
         │              │        information               │
         │              └──────────────────────────────────┘
         │                                              │
         │              ┌──────────────────────────────────┐
         │              │ S204: Perform second encoding    │
         │              │ on the second information, to     │
         │              │    obtain third information       │
         │              └──────────────────────────────────┘
         │                                              │
         │      S205: Send the third information          │
         │<──────────────────────────────────────────────│
         │                                              │
┌─ ─ ─ ─ ─ ─ ─ ─ ─ ─ ─ ─ ─ ─ ┐                          │
│ S206: Perform second decoding │                        │
│    on the third information  │                          │
└─ ─ ─ ─ ─ ─ ─ ─ ─ ─ ─ ─ ─ ─ ┘                          │
         │                                              │
┌─────────────────────────────┐                         │
│ S207: Perform first decoding │                        │
│     on the third information │                          │
└─────────────────────────────┘                         │
         │                                              │
```

FIG. 6

CSI-RS-1 → First encoding module → RFC-1, RFC-2, RFC-3, RFC-..., RFC-N

CSI-RS-2

CSI-RS-...

CSI-RS-M

Channel estimation → Y

First decoding module ← H

Second decoding module

Second encoding module

Access network device | Terminal device

**FIG. 7**

Communication apparatus 1000

Processing unit 1100

Transceiver unit 1200

**FIG. 8**

Communication apparatus 2000

Processor
2010

Memory
2030

Transceiver
2020

FIG. 9

3040

3000

3020 Transceiver

3050

3010

3080

Power
supply

Loudspeaker
3082

3030 Memory

Audio
circuit

Microphone
3084

Processor

3090 Camera

Sensor 3100

3060

Input unit

Display unit 3070

FIG. 10

FIG. 11

## INTERNATIONAL SEARCH REPORT

| International application No. |
| --- |
| **PCT/CN2021/135367** |

| A. | CLASSIFICATION OF SUBJECT MATTER |
| --- | --- |

H04W 28/16(2009.01)i;   H04L 5/00(2006.01)i

According to International Patent Classification (IPC) or to both national classification and IPC

| B. | FIELDS SEARCHED |
| --- | --- |

Minimum documentation searched (classification system followed by classification symbols)

   H04L H04W

Documentation searched other than minimum documentation to the extent that such documents are included in the fields searched

Electronic data base consulted during the international search (name of data base and, where practicable, search terms used)

   CNTXT; WPABS; ENTXT; CNKI; 3GPP: 信道状态信息, 参考信号, CSI, CSI-RS, 射频, 编码, 解码, 第一编码, 第二编码, 矩阵, CSI, CSI-RS, RF, radio frequency, code, encode, decode, first coding, second coding, first encoding, second encoding, matrix

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109787664 A (SONY CORPORATION) 21 May 2019 (2019-05-21)<br>      entire document | 1-28 |
| A | CN 109417412 A (HUAWEI TECHNOLOGIES CO., LTD.) 01 March 2019 (2019-03-01)<br>      entire document | 1-28 |
| A | WO 2020180221 A1 (TELEFONAKTIEBOLAGET LM ERICSSON (PUBL)) 10 September 2020 (2020-09-10)<br>      entire document | 1-28 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 February 2022** | **18 February 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/135367**

| Patent document cited in search report | | | Publication date (day/month/year) | Patent family member(s) | | | Publication date (day/month/year) |
|---|---|---|---|---|---|---|---|
| CN | 109417412 | A | 01 March 2019 | KR | 20200015941 | A | 13 February 2020 |
| | | | | KR | 102270126 | B1 | 25 June 2021 |
| | | | | CN | 108847875 | A | 20 November 2018 |
| | | | | WO | 2018228053 | A1 | 20 December 2018 |
| | | | | US | 2020119787 | A1 | 16 April 2020 |
| | | | | US | 10778301 | B2 | 15 September 2020 |
| | | | | CA | 3067273 | A1 | 20 December 2018 |
| | | | | US | 2019036581 | A1 | 31 January 2019 |
| | | | | US | 10270505 | B2 | 23 April 2019 |
| | | | | US | 2020382183 | A1 | 03 December 2020 |
| | | | | CN | 109150267 | A | 04 January 2019 |
| | | | | EP | 3435553 | A1 | 30 January 2019 |
| | | | | EP | 3435553 | A4 | 12 June 2019 |
| | | | | EP | 3435553 | B1 | 15 July 2020 |
| | | | | PL | 3435553 | T3 | 14 December 2020 |
| | | | | US | 2019181931 | A1 | 13 June 2019 |
| | | | | US | 10511367 | B2 | 17 December 2019 |
| | | | | AU | 2018282807 | A1 | 16 January 2020 |
| | | | | AU | 2018282807 | B2 | 23 July 2020 |
| | | | | BR | 112019026233 | A2 | 30 June 2020 |
| | | | | EP | 3787200 | A1 | 03 March 2021 |
| | | | | CN | 109039406 | A | 18 December 2018 |
| | | | | ZA | 202000272 | B | 27 October 2021 |
| | | | | JP | 2020523926 | A | 06 August 2020 |
| | | | | JP | 6878627 | B2 | 26 May 2021 |
| WO | 2020180221 | A1 | 10 September 2020 | EP | 3935742 | A1 | 12 January 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011444244
- CN 202110012794

- CN 202110214243